(19) Europäisches Patentamt
European Patent Office
Office européen des brevets

(11) Publication number: **0 241 949 A2**

(12) # EUROPEAN PATENT APPLICATION

(21) Application number: **87107835.8**

(22) Date of filing: **22.08.83**

(51) Int. Cl.[4]: **C 10 M 139/00**, C 10 M 141/12, C 07 F 7/04 // (C10M141/12, 129:52, 133:12, 135:14, 135:2-6, 135:36, 139:00), C10N10:00, C10N30:06, C10N30:08

(30) Priority: **15.09.82 US 418196**
**15.10.82 US 434602**
**18.03.83 US 476513**

(43) Date of publication of application: **21.10.87**
**Bulletin 87/43**

(84) Designated Contracting States: **AT BE CH DE FR GB LI LU NL SE**

(60) Publication number of the earlier application in accordance with Art. 76 EPC: **0120036**

(71) Applicant: **UNION OIL COMPANY OF CALIFORNIA, 376 So. Valencia Avenue P.O. Box 76, Brea, CA 92621 (US)**

(72) Inventor: **Holstedt, Richard A., 8684 Via Santa Cruz, Whittier California 90605 (US)**
Inventor: **Jessup, Peter, 717 South Broadway Santa Ana, California 92701 (US)**
Inventor: **Baron, Kenneth, 1460 Copper Mountain Drive, Diamond Bar California 91765 (US)**
Inventor: **Croudace, Michael C., 21022 Hagerstown Circle, Huntington Beach California 92645 (US)**

(74) Representative: **Baillie, Iain Cameron et al, c/o Ladas & Parry Isartorplatz 5, D-8000 München 2 (DE)**

(54) **Lubricating compositions.**

(57) Certain boron-containing, heterocyclic compounds are disclosed which impart extreme pressure, anti-wear and friction reducing properties to lubricating oils. Such lubricating oils are further provided with a hydrocarbon polysulfide derivative of 2, 5-dimercapto −1, 3, 4-thiodiazole as a copper corrosion inhibitor, or terephtalic acid as a lead corrosion inhibitor, or either an alkylated diphenyl amine, a bis (dithio-benzil) metal derivative, a sulfur bridged, bis hindered phenol or an alkyl or dialkyl diphenylamine as an oxidation inhibitor or a mixture thereof.

EP 0 241 949 A2

# LUBRICATING COMPOSITIONS

## Technical Field

This invention relates to lubricating oils and more particularly to improved lubricating oils containing additives, such as anti-wear and friction reducing compounds, corrosion inhibitors and oxidation inhibitors.

## Background Art

It is well recognized in the petroleum industry that boron containing compounds are desirable additives for lubricating oils. One such boron containing compound is disclosed in United States Patent 3,224,971 to Knowles et al. which relates to intracomplexed borate esters and to lubricating compositions containing said esters. The borate esters are organo-boron compounds derived from boric acid and a bis (O-hydroxy-alkylphenyl) amine or sulfide.

Another extreme pressure lubrication composition is disclosed in U.S. Patent 3,185,644 to Knowles et al., which relates to lubricating compositions containing amine salts of boron-containing compounds. The amine salts are formed by reaction of a hydroxy substituted amine and a trihydrocarbyl borate. The amine-borate compounds thus formed are described as useful as load carrying additives for mineral and synthetic base lubricating oils.

Boric-acid-alkylolamine reaction products and lubricating oils containing the same are disclosed in United States Patent 3,227,739 to Versteeg. These amine type

products are prepared by reacting equal molar proportions of diethanolamine or dipropanolamine and a long chain, 1, 2-epoxide. The intermediate reaction product thus produced is reacted with boric acid to produce the final reaction product. These compounds are added to lubricants to prevent rust formation.

Another boron ester composition is described in United States Patent 3,269,853 to English et al. which discloses a boron ester curing agent which consists of a cyclic ring structure containing boron, oxygen, nitrogen, carbon and hydrogen.

Another boron composition is disclosed in United States Patent 3,598,855 to Cyba which relates to cyclic borates of polymeric alkanolamines formed by reacting a borylating agent with a polymeric alkanolamine. The compounds thus formed are described as additives for a wide variety of petroleum products including lubricating oils.

As can readily be determined from the above, there is an ongoing effort to develop lubricating compositions having improved properties.

Accordingly, it is an object of the present invention to provide a boron-containing, heterocyclic compound or derivative thereof which has extreme pressure, anti-wear and friction reducing properties.

Another object of the present invention is to provide a boron-containing, heterocyclic compound which additionally contains sulfur and halogen atoms.

Yet another object of the present invention is to provide a lubricating composition having extreme pressure, anti-wear and friction reducing properties.

A further object of the present invention is to provide a lubricating composition containing extreme pressure, anti-wear, friction reducing and corrosion prevention additives, and in addition, an anti-oxidant to prevent attack of oxidants upon metal bearings.

Other objects and advantages of the inventions will be apparent from the following description.

Disclosure of Invention

This invention resides in certain boron-containing, heterocyclic compounds and derivatives of the same having the formula:

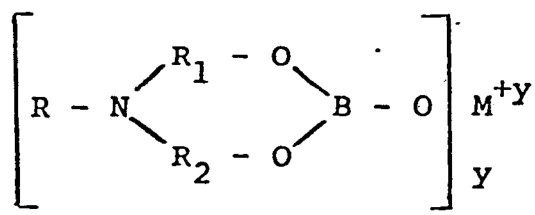

wherein R is an inorganic radical, or an organic radical having from 1 to about 50 carbon atoms, $R_1$ and $R_2$ are the same or different organic radicals having from 1 to about 50 carbon atoms, y is an integer from 1 to 4, and M is an organic or inorganic radical, but preferably is either hydrogen or a transition metal having an atomic number of 21 through 30 or a Group IVA metal (as disclosed in the Periodic Table located in the Handbook of Chemistry and Physics, 46th Edition). If M is an organic radical, it is preferred that it be chosen from the group consisting of alkyl, alkenyl, alkynyl, aryl, arylalkyl, and alkaryl radicals of between 1 and 50 carbon atoms, with methyl and cyclohexyl radicals being among the most preferred groups.

The invention additionally resides in an extreme pressure, anti-wear and friction reducing lubricating oil and a minor amount of a boron-containing, heterocyclic compound as above-described.

The boron-containing, heterocyclic compounds may conveniently be prepared by reacting either a saturated or unsaturated primary amine with an organic epoxide, such as an alkyl epoxide or an aromatic epoxide to form a reaction product. The reaction product thus formed is reacted with boric acid to form a boron-containing, heterocyclic compound.

Next, the boron-containing, heterocyclic compound may be reacted with a transition metal salt or a Group 1VA metal salt to produce a metal derivative of the boron-containing, heterocyclic compound.

Alternatively, the boron-containing heterocyclic compounds may be produced by reacting either sulfur or a halogen with a boron-containing, heterocyclic compound prepared using an unsaturated primary amine.

The above-described, boron-containing, heterocyclic compounds impart extreme pressure, anti-wear and friction reducing properties to lubricating oils when added to said oils at use concentrations.

Another embodiment of the invention resides in a lubricating composition comprising boron-containing, heterocyclic compounds of the invention, metal, sulfur or halogen, derivatives thereof, said lubricant composition being further provided on an optional basis with any of (1) a polysulfide derivative of 2,5-dimercapto-1, 3, 4-thiodiazole, (2) terephthalic acid, and (3) either a bis(dithiobenzil) metal derivative, a sulfur bridged, bis(hindered phenol) or an alkylated or dialkylated diphenyl amine or a mixture thereof.

Modes, Including Best Mode, For Carrying Out the Invention

The present invention resides in extreme pressure, anti-wear and friction reducing lubricating oil compositions comprising a major amount of an oil of lubricating viscosity and a minor amount of a boron-containing, heterocyclic compound. Alternatively corrosion inhibitors and anti-oxidants may be incorporated into the lubricating composition.

Anti-wear, friction reducing and extreme pressure (or "E.P.") additives, as they are commonly called, are chemicals which are added to lubricating compositions to reduce friction and reduce or prevent destructive metal-to-metal contact in the lubrication of moving surfaces. Lubricating oils provide good lubrication between

moving surfaces in contact with each other, as long as a film of said oil is maintained between the relatively moving surfaces. This particular kind of lubrication is commonly termed "hydrodynamic lubrication". However, when pressure and/or rubbing speeds between moving metal surfaces are such that the film of lubricating oil is no longer intact, metal-to-metal contact and wear occur over a significant portion of the previously lubricated area. Under such conditions, a kind of lubrication called boundary lubrication is needed, and is governed by parameters of the contacting surfaces, such as, surface finish, hardness, metal shear strength, and the coefficient of friction between the metals involved. Destructive metal-to-metal contact, due to lack of lubrication under extreme conditions, manifests itself in different forms such as scoring, welding, scuffing, ridging, rippling, rapid wear, and in some cases deformation or complete destruction of the metal components.

Extreme pressure, anti-wear and friction reducing lubricating additives prevent destructive metal-to-metal contact, under boundary lubrication conditions, by absorption or reacting with relatively moving metal surfaces to form an adherent, protective film of compounds which have a lower shear strength than that of the metal surfaces. This film acts in the capacity of a "boundary lubricant" and performs the function of lubrication when metal-to-metal contact occurs. Boundary conditions and boundary lubricant refer to the conditions and a suitable lubricant relating to the combination of applied load, fluid viscosity and rubbing speed, which do not allow hydrodynamic lubrication to exist. Hydrodynamic lubrication exists when a film of lubricant maintains separation between lubricated surfaces.

Many extreme pressure and anti-wear agents are oil soluble or easily dispersed as a stable dispersion in oil. Many of the E.P. agents which provide the high load capacity are chemically reactive, containing chlorine, sulfur or phosphorus which react with metal surfaces.

It has now been discovered that certain oil-soluble or dispersible boron-containing, heterocyclic compounds prepared as described herein, when added to lubricating oils or grease not only improve the ability of the lubricant to prevent seizure of the parts being lubricated but in addition greatly reduce the amount of friction and wear of such moving parts.

The boron-containing, heterocyclic compounds described herein may be incorporated in a wide variety of lubricating oils, for example, mineral oil, crude oil, synthetic oil, industrial oils, for example, cutting oil, metal working fluids and grease. For example, the additives may be added to lubricating oils derived from paraffins, naphthenic or mixed base crude petroleum oils that have been subjected to solvent and/or sulfuric-acid treatment, aluminum chloride treatment, hydrogenation and/or other refining treatments. In addition, the additives described herein may be incorporated in petroleum distillates, such as diesel fuel, jet engine fuel, furnace oil, gas oil and other light oils. The petroleum oils may be of virgin or cracked petroleum stock, or mixtures thereof, boiling in the range of about 100° F. (37.78° C) to about 1,100° F. (593.33° C.). The petroleum oil may contain cracked components such as those derived from cycle oils or cycle cuts boiling above gasoline, usually in the range of about 450° F. (232.22° C.) to about 750° F. (398.89° C.) and may be derived by catalytic or thermal cracking. Oils of high or low sulfur content such as diesel fuels or oils may additionally be used.

Preferred distillate lubrication oils which are improved by the addition of additives herein have an initial boiling point within the range of 350° F. (176.67° C.) to about 475° F. (245.83° C.), an end point in the range of about 500° F. (260° C.) to about 1,100° F. (598.33° C.), and a flash point not lower than 110° F. (43.33° C.). In the

most preferred embodiment, the additives herein are added to lubricants used in automotive engines and diesel engines, i.e., automotive engine oil and diesel engine oil.

Lubricants derived from oil shale are particularly desirable for use herein. Oil shale is typically found as a compact sedimentary rock, generally laminated, that contains little or no oil but does contain organic material, derived from aquatic organisms or waxy spores and pollen grains, which is convertible to oil by heat. Crude shale oil, in combination with water, gas and spent shale containing a carbonaceous residue and mineral matter, is formed by the pyrolysis of oil shale. The hydrocarbons of shale oil are highly unsaturated, resembling the products of thermal cracking of petroleum, as would be expected because of the pyrolytic origin of shale oil. Once the shale oil is extracted, it is subjected to conventional hydrotreating procedures to produce a variety of hydrocarbon products, including lubricants.

Synthetic lubricating oils as defined herein are those oils derived from a product of chemical synthesis (man-made oils). Typical examples of such compositions include the polyglycol fluids (i.e., polyalkylene glycol); silicones which consist of a silicone-oxygen polymer chain to which are attached hydrocarbon branches composed of either alkyl or phenyl groups; phosphates; polyphenyl esters; synthetic hydrocarbons and various esters of organic acids and alcohols.

The polyalkylene glycol lubricating oils suitable for use herein preferably are derived from the reaction product of the appropriate alkylene oxides. The alkylene moiety of the above compositions have a carbon chain of from about 1 to about 10 carbon atoms, preferably from about 2 to about 7 carbon atoms and a molecular weight within the range of from about 200 to about 2,000, especially from about 200 to about 1,000, most preferably from about 200 to about 800. Representative examples of suitable polyalkylene glycols

include polyethylene glycol, polypropylene glycol, polyisopropylene glycol, polybutylene glycol and the like.

Silicone lubricants have extra-ordinary low viscosity-temperature coefficients coupled with good oxidation stability. The lubricant contains a repeating silicon-oxygen backbone and has organic groups R, wherein R is methyl, phenyl, vinyl and the like. The silicones herein typically have an average molecular weight within the range of from about 400 to about 9,000.

The polyphenyl ethers suitable for use herein have from 3 to 7 benzene rings and form 1 to 6 oxygen atoms, with the stated oxygen atoms joining the stated benzene rings in chains as ether linkages. One or more of the stated benzene rings in these polyphenyl ethers may be hydrocarbonyl-substituted. The hydrocarbonyl substituents, for thermal stability, must be free of CH and aliphatic CH so that preferred aliphatic substituents are lower saturated hydrocarbon radicals (1 to 6 carbon atoms) like methyl and terbutyl, and preferred aromatic substituents are aryl radicals like phenyl and tolyl. In the latter case, the benzene ring supplied in the hydrocarbonyl substituent contributes to the total number of benzene rings in the molecule. Polyphenyl ethers consisting exclusively of chains of from 3 to 7 benzene rings with at least one oxygen atom joining the stated benzene rings in the chains as an ether linkage have particularly desirable thermal stability.

Exemplary of the alkyl polyphenyl ethers suitable for use are 3-ring polyphenyl ethers like 1-(p-methylphenoxyl) 4-phenoxybenzene and 2,4-diphenoxy-1-methylbenzene, 4-ring polyethers like bis(p-(p-methyl-phenoxy) phenyl) ether and bis ((p-tert-butylphenoxy)phenyl) ether, and the like.

Polyphenyl ethers consisting exclusively of benzene rings and ether oxygen atoms linking said rings are exemplified by the triphenoxy benzenes and aryl-substituted

polyphenyl ethers such as biphenyl phenoxyphenyl ether, biphenylyloxy-phenyl phenoxyphenyl ether, dibiphenylyloxy-benzene, bis(phenylyloxy-phenyl). ether, and the like.

A preferred class of polyphenyl ethers comprises those consisting of benzene rings joined in a chain by oxygen atoms as ether linkages between each ring. Examples of the polyphenyl ethers contemplated in the class are the bis(phenoxy-phenyl)ethers (4 benzene rings joined in a chain by 3 oxygen atoms), illustrative of which is bis(m-phenoxyphenyl) ether. The bis(phenoxy-phenoxy) benzenes are particularly preferred in the present invention. Illustrative of these are m-bis(m-phenoxy-phenoxy) benzene, m-bis(p-phenoxy-phenoxy) benzene, o-bis(o-phenoxy-phenoxy) benzene, and so forth. Further, the polyphenyl ethers suitable for use herein include the bis(phenoxy-phenoxy-phenoxyl) ethers such are bis(m-(m-phenoxy-phenoxy) phenyl) ether, bis(p-(p-phenoxy-phenoxy phenyl) ether, m-(m-phenoxy-phenoxy)phenoxy)phenyl m-(o-phenoxy-phenoxy) phenyl ether and the bis(phenoxy-phenoxy-phenoxy) benzenes such as m-bis(m-phenoxy-phenoxy-phenoxy) benzene, p-bis(p-(m-phenoxy-phenoxy)phenoxy) benzene and m-bis(m-p-phenoxy-phenoxy) phenoxy) benzene.

Synthetic lubricating oils derived from hydrocarbons are generally of two types, namely, dialkylated benzene and polymerized *alpha*-olefins. Dialkylated benzene herein is formed from the condensation product of the appropriate alkyl compound and has a carbon chain from about 5 to about 50 carbon atoms, preferably from about 8 to about 20 carbon atoms, and a molecular weight of from about 200 to about 1,500, preferably from about 300 to about 700. Representative compounds include di-n-decylbenzene, n-decyl-n-tetradecylbenzene, and n-nonyl-dodecylbenzene.

Alpha-olefins suitable for use in preparing lubricating oils herein are characterized by the formula $RCH=CH_2$, wherein R is a radical selected from the group of hydrogen and alkyl radicals having from about 4 to about 18

carbon atoms, preferably from about 6 to about 10 carbon atoms, and having a molecular weight of from about 80 to about 300, preferably from about 100 to about 200. Typical compounds include 1-octene, 1-decene and 1-dodecene.

Phosphates suitable for use herein as synthetic lubricating oils are the phosphate esters having the formula $O=P(OR)_3$, wherein R is aryl or alkyl having from about 4 to about 20 carbon atoms, preferably from 6 to about 10 carbon atoms, and have a molecular weight within the range of from about 200 to about 1,000, preferably from about 300 to about 550. Representative compounds include trioctyl phosphate, tricresyl phosphate and dicresyl methyl phosphate.

Esters of organic acids which are suitable for use herein as synthetic lubricating oils preferably are selected from organic acids having carbon chains of from $C_4$ to $C_{40}$ carbon units. Organic acids which may be reacted with the alcohols herein include caproic, decanoic, sebacic, laurel, oleic, stearic, palmitic etc. Likewise, alcohols herein may be derived from either natural or synthetic origin; for example, pentaerythritol, trimethylolpropane, amyl, 2-ethylhexanol or laurel alcohol may be used to form the desired ester. The esters are formed using conventional methods. For example, the esters may be prepared by reaction of the desired alcohol with the desired acid, acid anhydride or acid halide using conventional reaction conditions and techniques.

Synthetic lubricating oils which are improved by the addition of the additives herein additionally include those derived from solid carbonaceous products, conveniently prepared by blending finely ground carbonaceous materials with a solvent to form a slurry. The slurry is then introduced into a reaction vessel containing a conventional hydrogenation catalyst and is reacted under normal hydrogenating pressures and temperatures. After hydrogenation, solids that are present may conveniently be

removed from the product stream. The product is next stripped of solvent. The balance of the product stream may be distilled to obtain products of various boiling ranges, for example, hydrocarbons boiling in the gasoline range and hydrocarbons boiling in the lubricating oil range. Some of the products are useful as fuels and oils, the remainder may be further treated by a conventional petroleum process including cracking, hydrocracking, and the like. Synthetic lubricating oils produced from solid carbonaceous products, such as coal, are primarily aromatic and generally have a boiling range of about 300°F. (148.89° C.) to about 1,400° F. (760° C.), a density of about 0.6 to about 1.1 g/cm³ and a carbon to hydrogen molecular ratio in the range of about 1.3:1 to about 0.66:1. A typical example is a lubricating oil obtained from a subbituminous coal, such as Wyoming-Montana coal, comprising a middle oil having a boiling range of from about 375° F. (190.56° C.) to about 675° F. (357.44° C.). A description of how to prepare synthetic lubricating oils from a carbonaceous material, for example coal, is set forth in greater detail in U.S. Patent No. 3,957,619 issued to Chun et al. on May 18, 1976, the disclosure of which is incorporated herein by reference.

Alternatively, the synthetic oil improved herein may be a nonhydrocarbon oil of lubricating viscosity. Suitable examples include synthetic oils obtained by polymerization of lower molecular weight alkylene oxides, such as propylene oxide and/or ethylene oxide employing alcohol or acid initiators, such as lauryl alcohol or acetic acid. Other typical synthetic oils include esters, for example, di(2-ethylhexyl)-silicate, and silicate esters, such tetra-(2-ethylhexyl)-orthosilicate and hexa-(2-ethylbutoxy)-disiloxane.

If desired, the boron-containing, heterocyclic compounds described herein may be employed in conjunction with other additives commonly used in petroleum products. Thus, there may be added to the oil compositions of this

invention rust and corrosion inhibitors, emulsifying agents, antioxidants or oxidation inhibitors, dyes, haze inhibitors, anti-static agents, detergents, dispersants, viscosity index improvement agents and pour point reducing agents. Soaps or other thickening agents may be added to the lubricating oil compositions to form compositions having the consistency of a grease. When other additives are employed,it may be desirable, although not necessary to prepare additive concentrates comprising concentrated solutions of the herein boron-containing, heterocyclic compounds together with said other additives whereby the several additives are added simultaneously. Dissolution of the additive or additive concentrate into the oil composition may be facilitated by mixing accompanied with mild heating, but his is not absolutely essential.

Metal-working fluids such as cutting and grinding fluids are defined as liquids applied to a cutting tool or apparatus to assist in a cutting or machining process by washing away chips or serving as a lubricant or coolant, for example, in milling, drilling, turning, cutting, threading, broaching, surface grinding, form grinding, flute grinding, and similar metal-working operations. These oils are preferably obtained from conventionally refined lubricating oils containing film-strength additives, or sulfurized naphthene-base oils which may additionally contain emulsifying agents. Representative fluids and agents include: water, water solutions or emulsions of detergents and oils, mineral oils, fatty oils, chlorinated mineral oils, sulfurized mineral oils and mixtures thereof.

The herein described boron-containing, heterocyclic compounds may be incorporated in the lubricating oils in any convenient way. Thus, boron-containing, heterocyclic compounds may be added directly to the oil by dissolving the desired boron derivative in the lubricating oil at the desired level of concentration.

Normally, the boron-containing, heterocyclic compound is blended with the lubricating oil such that its concentration is from about 0.1 to about 15 percent by weight, preferably from about 0.5 to about 10 percent by weight of the resultant oil composition. Alternatively, the compounds may first be blended with suitable solvents to form concentrates that may readily be dissolved in the appropriate oil at the desired concentration. If a concentrate is employed, it ordinarily will contain at least 10 to about 65 percent by weight of the compound and preferably from about 25 to 65 percent by weight of said compound. The solvent in such a concentrate may be present in amounts of about 35 to about 75 percent by weight. Suitable solvents which may be used for this purpose are naphtha, light mineral oil (i.e., 150 neutral to 450 neutral) and mixtures thereof. The particular solvent selected should, of course, be selected so as not to adversely affect the other desired properties of the ultimate oil composition. Thus, the solvent for use in incorporating the additive in a fuel oil should be compatible with the fuel in terms of stability, boiling range, corrosiveness, etc.

The boron-containing, heterocyclic compounds of the present invention are represented by the following formula:

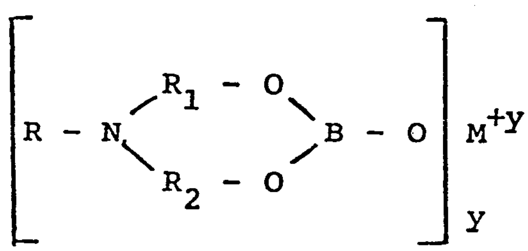

In the foregoing formula, R is an inorganic radical, or an organic radical having from about 1 to about 50 carbon atoms, typically about 1 to 30 carbon atoms, and preferably from about 1 to about 20 carbon atoms. Most preferably, R is hydrogen or a substituted or unsubstituted hydrocarbyl

group, particularly an alkyl, alkenyl, alkynyl, aryl, alkylaryl or arylalkyl radical having from about 1 to about 30 carbon atoms, preferably form about 1 to about 20 carbon atoms, especially from about 9 to about 20 carbon atoms. $R_1$ and $R_2$ are the same or different organic radicals having from about 1 to about 50 carbon atoms and preferably from about 2 to about 30 carbon atoms, with $R_1$ and $R_2$ oftentimes containing at least 3 or at least 4 carbon atoms. $R_1$ and $R_2$ generally include at least two carbon atoms bridged between the nitrogen and oxygen atoms, and usually, $R_1$ and $R_2$ are the same or different substituted or unsubstituted hydrocarbyl or hydrocarbyloxy groups. y is an integer from 1 to 4 and M is an organic or inorganic radical, but preferably is either hydrogen or a transition metal having an atomic number from 21 to 30 or a Group IVA metal of the Periodic Table and mixtures thereof. If M is an organic radical, it is preferred that it can be chosen from the group consisting of substituted and unsubstituted alkyl, alkynyl, alkenyl, aryl, arylalkyl, and alkaryl groups of between 1 and 50 carbon atoms, with methyl and cyclohexyl radicals being among the most preferred groups.

In one embodiment of the invention, useful when M is either hydrogen or a metal, but particularly when M is hydrogen, R is hydrogen or a substituted or unsubstituted hydrocarbyl group and at least one of $R_1$ and $R_2$, if both are aromatic, contains no carbon atoms or three to five carbon atoms of the same aromatic ring in a chain of atoms bridging (or connecting) the oxygen atom to the nitrogen atom. Generally in this embodiment, R contains at least 9 carbon atoms if aliphatic and at least 7 carbon atoms if aromatic; further, R in this embodiment, and sometimes also $R_1$ and $R_2$, are organic radicals other then hydroxyhydrocarbyl groups, and particularly other than alkanol groups. Further still, it is preferred that at least one of $R_1$ and $R_2$ in this embodiment and even more preferably both are radicals other than an amino or

hydrocarbylamino group, and it is further preferred that $R_1$ and $R_2$ contain only carbon atoms bridging the nitrogen and oxygen atoms, with none of said bridging carbon atoms being a member of an aromatic ring.

In another embodiment, boron-containing, heterocyclic compounds of the present invention have the formula:

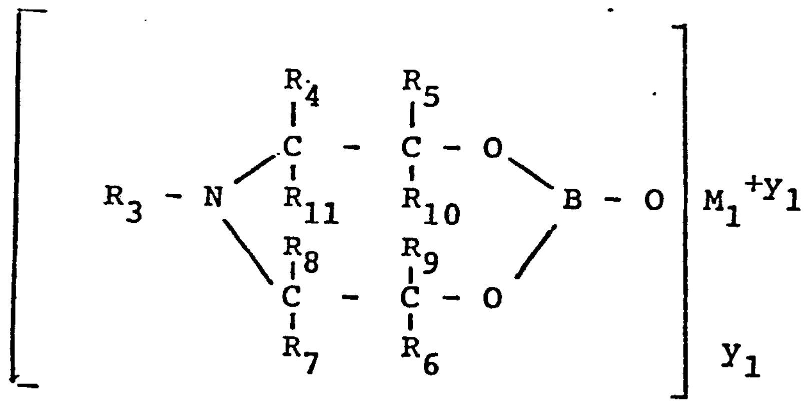

In this formula, $R_3$ is hydrogen or an organic radical having from about 1 to about 30 carbon atoms, preferably from about 1 to about 20 carbon atoms. Most preferably, $R_3$ is hydrogen or a substituted or unsubstituted alkyl, alkenyl, alkynyl, aryl, alkylaryl or arylalkyl radical having from about 1 to about 30 carbon atoms, preferably from about 1 to about 20 carbon atoms. $R_4$, $R_5$, $R_6$ and $R_7$ are the same or different and are either hydrogen or an organic radical, such as substituted or unsubstituted hydrocarbyl radicals having from 1 to about 50 carbon atoms, preferably from about 1 to 30 carbon atoms, wherein at least one (and preferably at least two) of the said $R_4$, $R_5$, $R_6$ or $R_7$ is an aryl, alkylaryl or arylalkyl radical having from about 6 to about 30 carbon atoms. $R_8$, $R_9$, $R_{10}$ and $R_{11}$ are the same or different radicals selected from hydrogen or organic radicals such as substituted or unsubstituted hydrocarbyl groups; typically, $R_8$, $R_9$, $R_{10}$ and $R_{11}$ are either hydrogen or an alkyl group having from about 1 to about 6 carbon atoms. $y_1$ is an integer from 1 to 4, and $M_1$ is an inorganic or organic radical, but is preferably selected from hydrogen or a metal selected from a transition metal having an atomic

number of 21 through 30 or a Group IVA metal. In this embodiment of the invention, $R_4$, $R_7$, $R_8$, $R_9$, $R_{10}$ and $R_{11}$ are preferably hydrogen or substituted or unsubstituted alkyl groups, with hydrogen being especially preferred for all six radicals, and $R_5$ and $R_6$ are aromatic radicals, preferably an unsubstituted phenyl radical. This embodiment of the invention has the added advantage of enhanced hydrolytic stability and solubility in lubricating oils.

The above-described, boron-containing, heterocyclic compounds are produced by (A) reacting a primary amine with an alkylene oxide or epoxide or an aromatic oxide. The resulting product is then reacted with boric acid to give the corresponding boron-containing, heterocyclic compound. Amines which are suitable for use herein include saturated amines such as methylamine, ethylamine, propylamine, butylamine, octadecylamine, dodecylamine, cyclohexylamine, phenylamine and unsaturated amines such as cocoamine, tallowamine and oleylamine and mixtures thereof.

The primary amines used herein may conveniently be derived from a commercial source or may be produced from alkyl, alicyclic, aryl, alkylaryl or arylalkyl halides and ammonia using conventional techniques and apparatus. These halides react with ammonia at moderately high temperatures and under pressure to give a mixture of primary, secondary and tertiary amines. The primary amine yield of this process may be improved by using an excess of ammonia in the reaction.

Another typical process for producing suitable amines comprises reacting alcohols with ammonia in the vapor phase at temperatures of from 570° F. (298.89°) to 940° F. (504.44° C.) under 200 to 1,000 p.s.i.g. (12.6 to 67 atmospheres). For the lower molecular weight alcohols, temperatures of 750° F. (398.89° C.), a pressure of about 200 p.s.i.g. (12.6 atmospheres) and a reaction time of 2 to 3 hours are desirable. A mixture of primary, secondary and

tertiary amines is formed wherein the amines exist in equilibrium with each other. It is possible to improve the yield of the desired amine by recycling undesired amines through the vapor phase. The most convenient method of obtaining the desired primary amine is through commercial sources.

Unsaturated primary amines are conventionally prepared by reacting a fatty acid with ammonia to produce an ammonium soap. The ammonium soap is heated to produce an amide. The amide thus produced is heated in the presence of a standard dehydration catalyst to produce a nitrile. The nitrile is contacted with hydrogen gas at increased temperature to produce either an unsaturated amine or a saturated amine depending mostly upon the degree of unsaturation of the starting fatty acid.

Primary amines useful in preparing the heterocyclic compounds of the present invention have the chemical formula $RNH_3$ wherein R is an organic radical, preferably where R contains no more than 30 carbon atoms.

The alkylene oxides or epoxides which are suitable for use herein may be prepared by three general methods (1) direct oxidation of olefins in the presence of a conventional oxidation catalyst; (2) reaction of olefins with peroxy acids; and (3) hydrolysis of chlorohydrins with bases. Chlorohydrins are produced by a two step reaction wherein an alkylene oxide, chlorine and water are passed into a packed reactor to form the respective alkylene chlorohydrin, for example ethylene chlorohydrin.

Another convenient method for preparing alkylene oxides or epoxides involves vapor phase oxidation of olefins. For example, an olefin and oxygen or air are passed over a silver oxide catalyst supported on alumina in the vapor phase under increased temperature and pressure to produce an epoxide.

A wide variety of alkylene or epoxides may be used to prepare the precursor for the heterocyclic compounds herein. Typical alkylene oxides or epoxides which are suitable for use include ethylene oxide, propylene oxide, 1,2-epoxy-butane, cyclohexene oxide, cyclooctene oxide, and cyclododecene oxide, and mixtures thereof.

Generally, the primary amine is reacted with an alkylene oxide or epoxide in the presence of a solvent, for example toluene to produce a dialkoxylated amine. The primary amine and alkene oxide or epoxide are reacted at a molar weight ratio typically of about 1:2. The solvent is added in sufficient quantity to dissolve or disperse the reactants to ensure better contact of said reactants. After the reaction proceeds to completion, the solvent is removed from the reaction product, for example, by evaporation, distillation, etc.

Next, the dialkoxylated amine is reacted with boric acid at a typical molar ratio of from about 1:2 to about 1:1 in the presence of a solvent, for example, xylenes, benzene, toluene, etc. to produce the heterocyclic compound required herein. Normally, the solvent will comprise from about 20 to about 50 weight percent, especially from about 30 to about 40 weight percent of the reaction mixture. The heterocyclic compound thus produced will contain from about 0.5 to about 10 weight percent, preferably from about 2 to about 5 weight percent of boron. The reactions herein are typically conducted under reflux at a temperature of from about 176° F. (80° C.) to about 450° F. (232.22° C.), especially from about 176° F. (80° C.) to about 300° F. (148.89° C.), at atmospheric pressure for about 1 to about 5 hours.

It is also possible to prepare a suitable heterocyclic compound herein from an aromatic oxide.

Aromatic oxides suitable for use herein preferably have the formula:

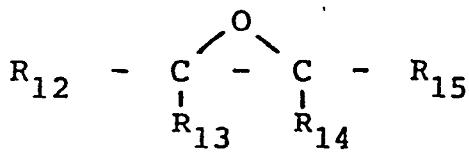

wherein at least one of said $R_{12}$, $R_{13}$, $R_{14}$ or $R_{15}$ is aryl, alkylaryl or arylalkyl with the remaining R groups being independently hydrogen or an organic radical having 1 to 30 carbon atoms, preferably hydrogen or an alkyl radical having 1 to 6 carbon atoms.

Suitable aromatic oxides may be obtained from a commercial source or prepared by three general methods: (1) direct oxidation of aromatic olefins in the presence of a conventional oxidation catalyst; (2) reaction of aromatic olefins with peroxy acids; and (3) hydrolysis of chlorohydrins with bases.

A wide variety of aromatic oxides may be used to prepare the epoxide/primary amine adducts needed to produce the boramid compounds herein. Typical aromatic oxides for use herein include styrene oxide, alpha-methylstyrene oxide, para-tertiarybutylstyrene oxide, cresyl oxide including ortho-methylstyrene oxide, 1,2-epoxybenzene, and para-methyl styrene oxide and mixtures thereof.

When an aromatic oxide is selected as a starting material, the primary amine is normally reacted with the aromatic oxide in the presence of a solvent, for example, toluene, methanol or water to produce an epoxide/amine adduct. The solvent is added in sufficient quantity to dissolve or disperse the reactants to insure better contact thereof.

Generally the primary amine and aromatic oxide are reacted at a pressure of from about atmospheric pressure to about 500 p.s.i.g. (33 atmospheres) at a temperature of from 176° F. (80° C.) to 450° F.(232.22° C.), for 1 to 5 hours.

The primary amine is preferably reacted with the aromatic oxide at a molar ratio of 1:2 to produce an epoxide/amine adduct. It may be desirable to react the primary amine with two different aromatic oxides to produce a mixed epoxide/amine adduct. In this embodiment of the invention, one mole of the primary amine is reacted with one mole each of two different aromatic oxides to produce the desired mixed oxide amine. Yet another method of producing the desired epoxide/amine adduct involves reacting one mole of an aromatic-substituted alkene oxide and one mole of an alkene oxide, for example ethylene oxide, with a primary amine to produce an epoxide/amine adduct having an aromatic moiety and an alkyl moiety attached to the nitrogen atoms of the primary amine.

Next, the epoxide/amine adduct is reacted with boric acid at a molar ratio of from about 1:2 to about 1:1 in the presence of a solvent, for example, xylene, benzene, toluene, or the like, to produce a boron-containing, heterocyclic compound of the present invention. Normally, the solvent will comprise from about 20 to about 50 weight percent, preferably from about 30 to about 40 weight percent of the reaction mixture. The reaction is conducted under reflux at a temperature of from 176° F. (80° C.) to 450° F. (232.22° C.), preferably from 176° F. (80° C.) to 300° F. (148.89° C.), at a pressure of from atmospheric pressure to about 500 p.s.i.g. (33 atmospheres), for about 1 to about 5 hours. The boron-containing heterocyclic compound thus produced will contain from about 0.5 to about 10 weight percent, preferably from about 2 to about 5 weight percent of boron.

Metal derivatives of the boron-containing, heterocyclic compounds herein are conveniently prepared by contacting the boron-containing, heterocyclic compound with a metal usually in salt form. Thus, the metal acetates,

propionates, etc., are suitable for use. The preferred metal compound for use in incorporating the metal ion into the boramid compound is the metal acetate. Generally, the heterocyclic compounds are reacted with the metal compounds in a molar ratio range of from about 1:4 to about 6:1, preferably from about 1:1 to about 4:1, at a pressure of from about atmospheric to about 500 p.s.i.g. (33 atmospheres) and a temperature of from about 176° F. (80° C.) to about 450° F. (232.22° C.). Water and acetic acid are distilled from the reaction mixture using a water-cooled condenser.

Desirable metals are usually selected from transition metals having an atomic number of 21 through 30 or Group IVA metals of the Periodic Table. Transition metals which are suitable for use are selected from scandium, titanium, vanadium, chromium, manganese, iron, cobalt, nickel, copper and zinc and mixtures thereof. Suitable Group IVA metals include lead and tin and mixtures thereof. Normally, the metal will comprise from about 1 to about 17 weight percent, preferably from about 5 to about 9 weight percent of the boron-containing, heterocyclic compound. When a metal is incorporated into the compounds herein, the metal will displace and substitute for the hydrogen atom attached to the oxygen atom which is a component of the hydroxy group attached to the boron atom of the heterocyclic structure.

Suitable boron-containing, heterocyclic compounds herein which contain alkyl species in the heterocyclic ring structure are selected from the group consisting of methylaminodiethylate hydrogen borate, ethylaminodiethylate hydrogen borate, propylaminodiethylate hydrogen borate, butylaminodiethylate hydrogen borate, octadecylaminodiethylate hydrogen borate, dodecylaminodiethylate hydrogen borate, cyclohexylaminodiethylate hydrogen borate, phenylaminodiethylate hydrogen borate, oleylaminodiethylate hydrogen borate, cocoaaminodiethylate hydrogen borate,

tallowaminodiethylate hydrogen borate, dodecylamino di(-2-methylethylate) hydrogen borate, and dodecylamino di(-2-phenylethylate) hydrogen borate and mixtures thereof.

Metals are conveniently incorporated into the boron-containing, heterocyclic compounds herein. Generally, the metal is reacted with the desired boron-containing, heterocyclic compound in salt form. Thus, the metal acetates, propionates, etc. are suitable for use. It should be noted that not all metal salts are desirable for incorporating the metal ion into the boron-containing, heterocyclic compound. The metal carbonates, nitrates, chlorides and sulfates, to name a few, are all undesirable as vehicles for imparting metal ions into the boron-containing, heterocyclic compound. These metal salts experience solubility problems and separation problems, and, in addition, undesirable ions frequently contaminate the boron-containing, heterocyclic compound. Generally, the boron-containing, heterocyclic compounds are reacted with the metal compounds herein in a molar ratio range of from about 1:4 to about 6:1, especially from about 1:1 to about 4:1.

Desirable metals are conveniently selected from transition metals having an atomic number of 21 through 30 or Group IVA metals for the Periodic Table. Transition metals which are suitable for use are selected from scandium, titanium, vanadium, chromium, manganese, iron, cobalt, nickel, copper and zinc and mixtures thereof. Suitable Group IVA metals include lead and tin and mixtures thereof. Normally, the metal will comprise from about 1 to 17 weight percent, preferably from about 5 to about 9 weight percent of the boron-containing, heterocyclic compound.

When a metal is incorporated into the boron-containing, heterocyclic compound, the metal will substitute for the hydrogen atom of the hydroxy group attached to the boron atom of the heterocyclic structure. In addition, the Examples hereinafter refer to cocoaminodiethylate hydrogen borate as boramid C/12, tallowaminodiethylate hydrogen

borate as boramid T/12 and octadecylaminodiethylate hydrogen borate as boramid 18/12. The corresponding metal-boron derivative will, of course, recite the desired metal in the compound nomenclature, for example, zinc boramid C/12, etc.

Representative boron-containing, heterocyclic compounds which contain aromatic species in the heterocyclic ring structure include the following compounds: 1-hydroxy-3,7-diphenyl-5-dodecyl-5-aza-1-bora-2,8-dioxacyclooctane; 1-hydro-4,6-diphenyl-5-dodecyl-5-aza-1-bora-2,8-dioxacyclooctane; 1-hydroxy-4,7-diphenyl-5-dodecyl-5-aza-1-bora-2,8-dioxacyclooctane; 1-hydroxy-3,7-dicresyl-5-dodecyl-5-aza-1-bora-2,8-dioxacylooctane; 1-hydro-4,6-dicresyl-5-dodecyl-5-aza-1-bora-2,8-dioxacyclooctane; 1-hydroxy-4,7-dicresyl-5-dodecyl-5-aza-1-bora-2,8-dioxacyclooctane; 1-hydroxy-3,7-dimethyl-3,7-diphenyl-5-dodecyl-5-aza-1-bora-2,8-dioxacyclooctane;1-hydroxy-4,6-dimehyl-4,6-diphenyl-5-dodecyl-5-aza-1-bora-2,8-dioxacyclooctane;1-hydroxy-4,7-dimethyl-4,7-diphenyl-5-dodecyl-5-aza-1-bora-2,8-dioxacyclooctane; 1-hydroxy-3,7-para tertiarybutylphenyl-5-dodecyl-5-aza-1-bora-2,8-dioxacyclooctane; 1-hydroxy-4,6-para tertiarybutylphenyl-5-dodecyl-5-aza-1-bora-2,8-dioxacyclooctane; 1-hydroxy-4,7-para tertiarybutyl-phenyl-5-dodecyl-5-aza-1-bora-2,8-dioxacyclooctane; 1-hydroxy-3,7-diphenyl-5-coco-5-aza-1-bora-2,8-dioxacyclooctane; and 1-hydro-3,7-diphenyl-5-tallow-5-aza-1-bora-2,8-dioxacyclooctane and mixtures thereof. It should be noted that the methyl, ethyl, propyl, butyl, cyclohexyl, octadecyl, phenyl, steryl, oleyl, coco and tallow moieties may be substituted for the dodecyl moiety in the above heterocyclic compounds.

Representative metallic derivatives of the above compositions include the following compounds: copper di (-1-oxy-3-,7-diphenyl-5-dodecyl-5-aza-1-bora-2,8-dioxacyclooctane); copper di (-1-oxy-4,6-diphenyl-5-dodecyl-5-aza-1-bora-2,8-dioxa-cyclooctane); copper di (-1-oxy-4,7-diphenyl-5-dodecyl-5-aza-1-bora-2,8-dioxacylooctane; copper di (-1-oxy-3,7-dicresyl-5-dodecyl-5-aza-1-bora-2,8-dioxacyclo-

BUREAU
OMPI

octane); copper di (-1-oxy-4,6-dicresyl-5-dodecyl-5-aza-1-bora-2,8-dioxacyclooctane); copper di (-1-oxy-4,7-dicresyl-5-dodecyl-5-aza-1-bora-2,8-dioxacyclooctane); copper di (-1-oxy-3,7-dimethyl-3,7-diphenyl-5-dodecyl-5-aza-1-bora-2,8-dioxacyclooctane); copper di(-1-oxy-4,6-dimethyl-4,6-diphenyl-5-dodecyl-5-aza-1-bora-2,8-dioxacyclooctane); copper di (-1-oxy-4,7-dimethyl-4,7-diphenyl-5-dodecyl-5-aza-1-bora-2,8-dioxacyclooctane); copper di(-1-oxy-3,7-para tertiarybutyl-phenyl-5-dodecyl-5-aza-1-bora-2,8-dioxacyclooctane); copper di (-1-oxy-4,6 para tertiarybutylphenyl-5-dodecyl-5-aza-1-bora-2,8-dioxacyclooctane); copper di (-1-oxy-4,7-para tertiarybutyl-phenyl-5-dodecyl-5-aza-1-bora-2,8-dioxacyclooctane); copper di (-1-oxy-3,7-diphenyl-5-coco-5-aza-1-bora-2,8-dioxacyclooctane); and copper di (-1-oxy-3,7-diphenyl-5-tallow-5-aza-1-bora-2,8-dioxacyclooctane) and thereof. Other metals which may be incorporated into the above compounds, i.e., substituted for the copper, include scandium, titanium, chromium, manganese, iron, cobalt, nickel, zinc, lead and tin and mixtures thereof. In addition, methyl, ethyl, propyl, butyl, cyclohexyl, octadecyl, phenyl, steryl, oleyl, coco and tallow moieties may be substituted for the dodecyl moiety in the above-described heterocyclic compounds.

Another species of the heterocyclic compounds herein are the bis(hydrocarbyloxy methylated) boron-containing, heterocyclic compounds. These compounds have

the following formula:

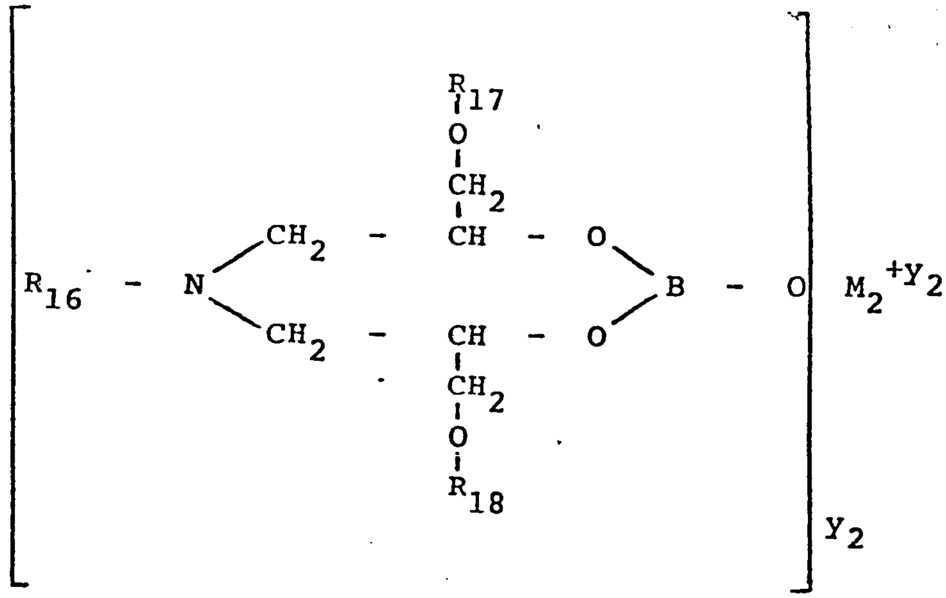

where $R_{16}$ is an inorganic radical or an organic radical having from 1 to about 50 carbon atoms , $R_{17}$ and $R_{18}$ are the same or different organic radicals having from 1 to about 50 carbon atoms, $y_2$ is an integer from 1 to 4, and $M_2$ is an organic or inorganic radical but preferably is hydrogen or a metal selected from a transition metal having an atomic number of 21 through 30 or a Group IVA metal as disclosed in the Periodic Table located in the Handbook of Chemistry and Physics, 46th Edition. If $M_2$ is an organic radical, it is preferred that it be chosen from the group consisting of substituted or unsubstituted alkyl, alkenyl, alkynyl, aryl, arylalkyl, and alkaryl radicals, with methyl and cyclohexyl radicals being among the most preferred groups.

When $R_{16}$, $R_{17}$ and $R_{18}$ are organic radicals, usually at least 65 percent, more usually at least 75 percent, and most usually at least 90 percent of the atoms composing said radicals will be carbon and hydrogen atoms. Preferably, $R_{16}$ is hydrogen or a substituted or unsubstituted alkyl, alkenyl, alkynyl, aryl, alkylaryl, or arylalkyl radical having from 1 to about 30 carbon atoms, and more preferably, from 1 to about 24 carbon atoms. On the other hand, $R_{17}$ and $R_{18}$ are preferably the same or different

radicals selected from a substituted or unsubstituted alkyl, alkenyl, alkynyl, aryl, alkylaryl and arylalkyl radicals having from 1 to about 50 carbon atoms, and more preferably from 1 to about 30 carbon atoms, more preferably still from 1 to about 20 carbon atoms, and most preferably from 1 to about 10 carbon atoms.

Primary amines useful in preparing the bis(hydrocarbyloxy methylated), boron-containing, heterocyclic compounds and metal derivatives thereof may be produced by reacting ammonia with organic halides, such as the alkyl, aryl, alkylaryl or arylalkyl halides having 1 to 30 carbon atoms. These halides react with ammonia at moderately high temperatures and under pressure to produce a mixture of primary, secondary and tertiary amines. The primary amine yield of this process may be improved by using an excess of ammonia in the reaction.

In preparing the bis(hydrocarbyloxy methylated) boron-containing, heterocyclic compounds, the primary amines are typically reacted with an alkyl, aryl, alkylaryl or arylalkyl glycidyl ether to produce a bis(hydrocarbyloxy methylated) primary amine. Glycidyl ethers suitable for use herein preferably have the formula:

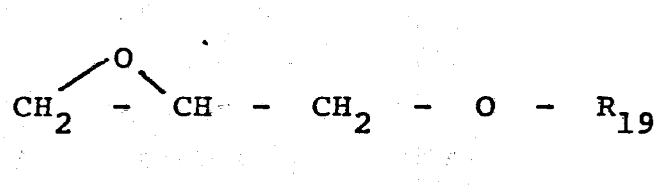

where $R_{19}$ is an organic radical having 1 to 50 carbon atoms with said organic radical in a preferred mode comprising at least 75 percent, preferably 90 percent of carbon and hydrogen atoms. Preferably, $R_{19}$ is a substituted or unsubstituted alkyl, aryl, alkylaryl or arylalkyl radical having from 1 to about 50 carbon atoms, preferably from 1 to about 30 carbon atoms, more preferably still from 1 to about 20 carbon atoms, and most preferably from 1 to about 10 carbon atoms.

A wide variety of glycidyl ethers may be used to prepare the oxylated primary amines needed to produce the heterocyclic compounds herein. Typical glycidyl ethers for use herein include methyl glycidyl ether, ethyl glycidyl ether, propyl glycidyl ether, butyl glycidyl ether, phenyl glycidyl ether, cresyl glycidyl ether, phenyl methyl glycidyl ether, ethyl phenyl glycidyl ether and phenyl ethyl glycidyl ether and mixtures thereof.

The primary amine is normally reacted with the glycidyl ether in the presence of a solvent, for example, toluene to produce a dioxygenated amine. The solvent is added in sufficient quantity to dissolve or disperse the reactants to insure better contact thereof.

Generally, the primary amine and glycidyl ether are reacted at a pressure of from about atmospheric pressure to about 500 p.s.i.g. (33 atmospheres) at a temperature of from 176° F. (80° C.) to 450° F. (232.22° C.) for 1 to 30 hours. The primary amine is preferably reacted with the glycidyl ether at a molar ratio of 1:2 to produce the bis(hydrocarbyloxy methylated) amine. It may be desirable to react the primary amine with two different glycidyl ethers to produce a mixed hydrocarbyloxy methylated amine. In this embodiment of the invention, one mole of the primary amine is reacted with one mole each of two different glycidyl ethers to produce the desired mixed hydrocarbyloxy methylated amine. Yet another method of producing the desired amine involves reacting one mole of an aromatic glycidyl ether and one mole of an alkyl glycidyl ether with a primary amine to produce an amine having an alkaryl moiety and an alkyl moiety attached to the nitrogen atom of the primary amine.

Next, the bis(hydrocarbyloxy methylated) amine or mixed hydrocarbyloxy methylated amine is reacted with boric acid at a molar ratio of from about 1:2 to about 1:1 in the presence of a solvent, for example, xylene, benzene, toluene, or the like, to produce a bis(hydrocarbyloxy methylated) boron-containing, heterocyclic compound of the present

invention. Normally, the solvent will comprise from about 20 to about 50 weight percent, preferably from about 30 to 40 weight percent of the reaction mixture. The reaction is conducted under reflux at a temperature of from 176° F. (80° C.) to 300° F. (232.22° C.), at a pressure of from atmospheric pressure to about 500 p.s.i.g. (33 atmospheres) for about 1 to about 30 hours. The compound thus produced will contain from about 0.5 to about 10 weight percent, preferably from about 2 to about 5 weight percent of boron.

In a preferred mode the primary amine and glycidyl ether are first reacted together and the intermediate reaction product thus produced is, next, reacted with boric acid.

An alternate method of producing the bis(hydrocarbyloxy methylated) boron-containing, heterocyclic compounds herein involves reacting the primary amine, glycidyl ether and boric acid in a one-step process.

Representative bis(hydrocarbyloxy methylated), boron-containing, heterocyclic compounds produced in accordance with the procedure herein include the following compounds: 1-hydroxy-3,7-di(methoxy methyl)-5-dodecyl-5-aza-1-bora-2,8-dioxacyclooctane; 1-hydroxy-4,6-di(methoxy methyl)-5-dodecyl-5-aza-1-bora-2,8-dioxacyclooctane; 1-hydroxy-3,7-di(ethoxy methyl)-5-dodecyl-5-aza-1-bora-2,8-dioxacyclooctane; 1-hydro-3,7-di(propoxy methyl)-5-dodecyl-5-aza-1-bora-2,8-dioxacyclooctane; 1-hydroxy-4,6-di(butoxy methyl)-5-dodecyl-5-aza-1-bora-2,8-dioxacyclooctane; 1-hydro-3,7-di(methyl phenoxy methyl)-5-dodecyl-5-aza-1-bora-2,8-dioxacyclooctane; 1-hydroxy-4,6-di(methyl phenoxy methyl)-5-dodecyl-5-aza-1-bora-2,8-dioxacyclooctane; 1-hydroxy-3,7-di(ethyl phenoxy methyl)-5-dodecyl-5-aza-1-bora-2,8-dioxacyclooctane; 1-hydroxy-4,6-di(phenyl methoxy methyl)-5-dodecyl-5-aza-1-bora-2,8-dioxacyclooctane; and 1-hydro-3,7-di(phenyl ethoxy methyl)-5-dodecyl-5-aza-1-bora-2,8-dioxacylooctane and mixtures thereof. It should be

noted that the methyl, ethyl, propyl, butyl, cyclohexyl, octadecyl, phenyl, steryl, oleyl, coco and tallow moieties may be substituted for the dodecyl moiety in the above heterocyclic compounds. This embodiment of the invention has the added advantage of enhanced extreme pressure properties and a more pleasant odor.

Metal derivatives of the bis(hydrocarbyloxy methylated), boron-containing, heterocyclic compounds, herein are conveniently prepared by contacting the compound with a metal, usually in salt form. Thus, the metal acetates, proprionates, etc., are suitable for use. The preferred metal compound for use in incorporating the metal ion into the bis(hydrocarbyloxy methylated) boron-containing, heterocyclic compound is the metal acetate. Generally, these compounds are reacted with the metal compounds in a molar ratio range of from about 1:4 to about 6:1, preferably from about 1:1 to about 4:1, at a pressure of from about atmospheric to about 500 p.s.i.g. (33 atmospheres) and a temperature of from about 176° F. (80° C.) to about 450° F. (232.22° C.). Water and acetic acid are distilled from the reaction mixture using a water-cooled condenser.

Representative of the metal compounds are: copper di[-1-oxy-2,7-di(methoxy methyl)-5-dodecyl-5-aza-1-bora-2,8-dioxacyclooctane]; copper di[-1-oxy-4,6-di(methoxy methyl)-5-dodecyl-5-aza-1-bora-2,8-dioxacyclooctane]; copper di[-1-oxy-3,7-di(ethoxy methyl)-5-dodecyl-5-aza-1-bora-2,8-dioxacyclooctane]; copper di[-1-oxy-3,7-di(propoxy methyl)-5-dodecyl-5-aza-1-bora-2,8-dioxacyclooctane]; copper di[-1-oxy-4,6-di (butoxy methyl)-5-dodecyl-5-aza-1-bora-2,8-dioxacyclooctane]; copper di[-1-oxy-3,7-di(methyl phenoxy methyl)-5-dodecyl-5-aza-1-bora-2,8-dioxa-cyclooctane]; copper di[-1-oxy-4,6-di (methyl phenoxy methyl)-5-dodecyl-5-aza-1-bora-2,8-dioxacyclooctane]; copper di[-1-oxy-3,7-di(ethyl phenoxy methyl)-5-dodecyl-5-aza-1-bora-2,8-dioxacyclooctane]; copper di[-1-oxy-4,6-di(phenyl methoxy methyl)-5-dodecyl-5-aza-1-bora-2,

8-dioxacyclooctane]; and copper di[-1-oxy-3,7-di(phenyl ethoxy methyl)-5-dodecyl-5-aza-1-bora-2,8-dioxacyclooctane] and mixtures thereof. Other metals which may be incorporated into the above compounds, i.e., substituted for the copper, include scandium, titanium, vanadium, chromium, manganese, iron, cobalt, nickel, zinc, lead and tin and mixtures thereof. In addition, methyl, ethyl, propyl, butyl, cyclohexyl, octadecyl, phenyl, steryl, oleyl, coco and tallow moieties may be substituted for the dodecyl moiety in the above-described compounds.

In yet another embodiment of the present invention, the additive comprises a sulfurized boron-containing, heterocyclic compounds herein have the formula:

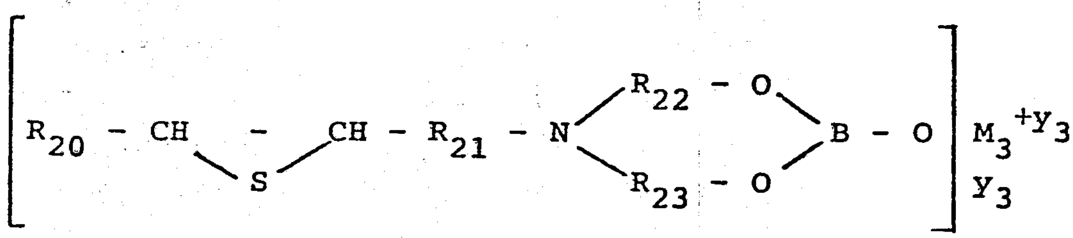

wherein $R_{20}$ is an inorganic radical, or an organic radical having from about 1 to about 50 carbon atoms and $R_{21}$, $R_{22}$ and $R_{23}$ are the same or different organic radicals having from about 1 to about 50 carbon atoms. Preferably $R_{20}$, $R_{21}$, $R_{22}$ and $R_{23}$ are the same or different organic radicals having from about 1 to about 30 carbon atoms and typically are the same or different, substituted or unsubstituted hydrocarbyl groups, such as substituted or unsubstituted aliphatic and aromatic groups, particularly alkyl, alkenyl, alkynyl, aryl, alkaryl or arylalkyl radicals having from about 1 to 30 carbon atoms. Most preferably, $R_{20}$ and $R_{21}$ are the same or different unsubstituted alkyl radicals having from about 1 to about 20 carbon atoms, while $R_{22}$ and $R_{23}$ are the same or different unsubstituted alkylaryl or arylalkyl groups having from about 8 to about 30 carbon atoms. $y_3$ is an integer from 1 to 4 and $M_3$ is an organic or inorganic group, but preferably is either hydrogen or a transition metal having an atomic number from 21 to 30 or a

Group IVA metal of the Periodic Table and mixtures thereof. If $M_3$ is an organic radical, it is preferred that it be chosen from the group consisting of alkyl, alkenyl, alkynyl, aryl, arylalkyl, and alkaryl radicals of between 1 and 50 carbon atoms, with methyl and cyclohexyl radicals being among the most preferred groups.

In the most highly preferred embodiment of the present invention, the boron-containing, heterocyclic compound is sulfurized and has the formula:

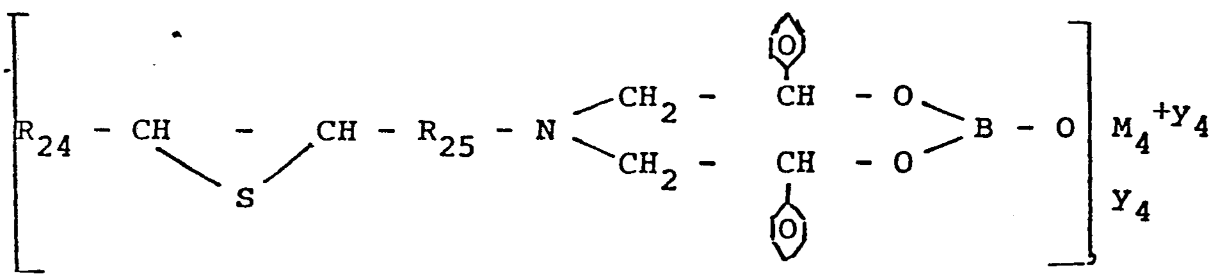

wherein $R_{24}$ and $R_{25}$ are the same or different organic radicals having from about 1 to about 30 carbon atoms, and preferably, $R_{24}$ and $R_{25}$ are independently selected from substituted or unsubstituted alkyl, alkenyl, alkynyl, aryl, alkylaryl or arylalkyl radicals having from about 1 to about 30 carbon atoms, and most preferably, $R_{24}$ and $R_{25}$ are the same or different unsubstituted alkyl radicals having from about 1 to about 20 carbon atoms. $y_4$ is an integer from 1 to 4 and $M_4$ may be one or more organic or inorganic groups, but preferably is either hydrogen or a transition metal having an atomic number from 21 to 30 or a Group IVA metal of the Periodic Table and mixtures thereof. If $M_4$ is an organic radical, it is preferred that it be chosen from the group consisting of alkyl, alkenyl, alkynyl, aryl, arylalkyl, and alkaryl groups of between 1 and 50 carbon atoms, with methyl and cyclohexyl radicals being among the most preferred groups.

Polysulfurized, boron-containing heterocyclic compounds useful herein have the formula:

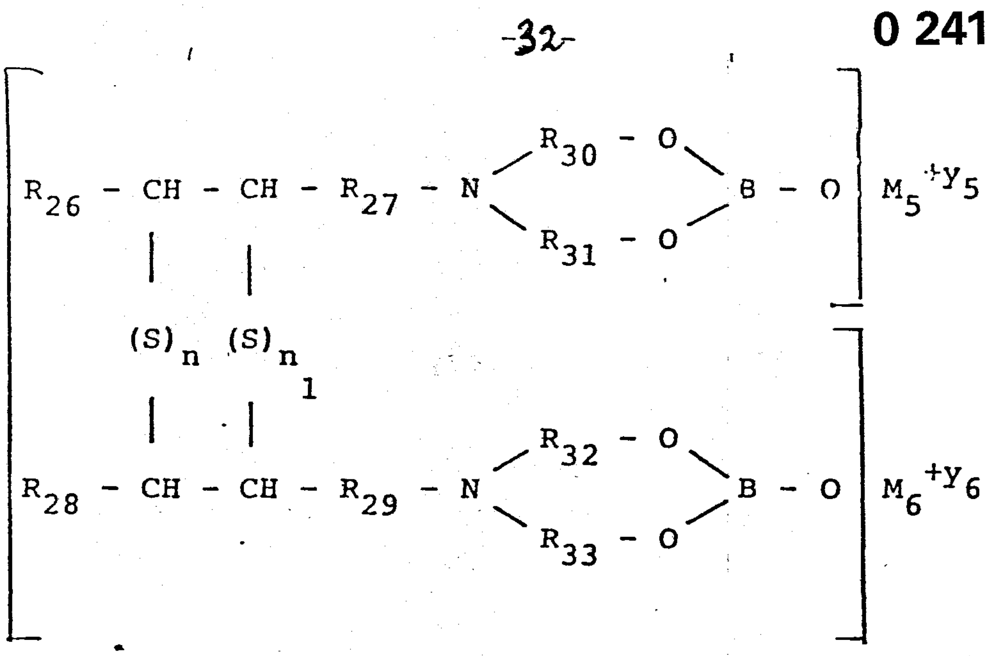

wherein $R_{26}$ and $R_{28}$ may be inorganic radicals but more typically $R_{26}$ and $R_{28}$ as well as $R_{27}$ and $R_{29}$ are the same or different organic radicals having from about 1 to about 30 carbon atoms, preferably 1 to 20 carbon atoms, and $R_{30}$, $R_{31}$, $R_{32}$ and $R_{33}$ are the same or different organic radicals having from about 1 to about 50 carbon atoms, preferably, from about 1 to about 30 carbon atoms. n and $n_1$ are the same or different integers from 1 to 4, preferably 1 or 2. The radicals $R_{26}$, $R_{27}$, $R_{28}$ and $R_{29}$ are typically selected from the same or different, substituted or unsubstituted hydrocarbyl groups such as substituted or unsubstituted aliphatic and aromatic groups, particularly the alkyl, alkenyl, alkynyl, aryl, alkaryl or arylalkyl radicals having from about 1 to about 30 carbon atoms, and preferably, $R_{26}$, $R_{27}$, $R_{28}$ and $R_{29}$ are the same or different alkyl radicals having from 1 to about 20 carbon atoms. The organic radicals $R_{30}$, $R_{31}$, $R_{32}$ and $R_{33}$ are typically selected from the same or different, substituted or unsubstituted hydrocarbyl groups such as substituted or unsubstituted aliphatic and aromatic groups, particularly the alkyl, alkenyl, alkynyl, aryl, alkylaryl or arylalkyl radicals having from about 1 to about 30 carbon atoms. Preferably $R_{30}$, $R_{31}$, $R_{32}$, and $R_{33}$ are alkaryl or arylalkyl having from about 8 to about 30 carbon atoms. $y_5$ and $y_6$ are the same or different integers from 1 to 4, and $M_5$ and $M_6$ are

organic or inorganic groups, but preferably are either hydrogen or a transition metal having an atomic number from 21 to 30 or a Group IVA metal of the Periodic Table and mixtures thereof. If $M_5$ or $M_6$ is an organic radical, it is preferred that it be chosen from the group consisting of alkyl, alkenyl, alkynyl, aryl, arylalkyl, and alkaryl radicals of between 1 and 50 carbon atoms, with methyl and cyclohexyl radicals being among the most preferred group. $M_5$ and $M_6$ may be the same physical atom or species, i.e. the two borated radicals may be attached to the same metal atom.

Also suitable herein are sulfohalogenated, boron-containing, heterocyclic compounds have the formula:

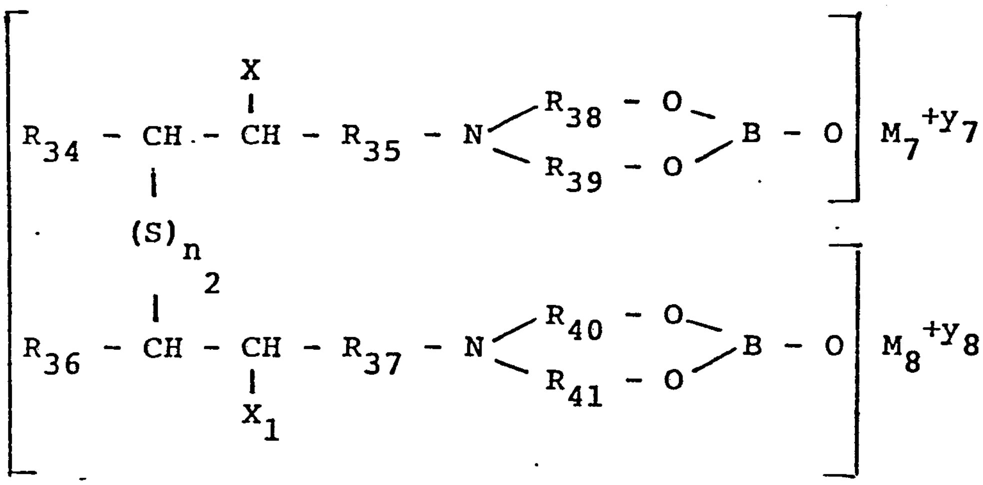

wherein $R_{34}$ and $R_{36}$ may be inorganic radicals but more typically $R_{34}$ and $R_{36}$ as well as $R_{35}$ and $R_{37}$ are the same or different organic radicals having from about 1 to about 30 carbon atoms, $R_{38}$, $R_{39}$, $R_{40}$ and $R_{41}$ are the same or different organic radicals having from about 1 to about 50 carbon atoms, $n_2$ is an integer from 1 to 4, preferably 1 or 2, X and $X_1$ are halogens independently selected from the group consisting of chlorine, fluorine, bromine and iodine and mixtures thereof, with chlorine being especially preferred. The radicals $R_{34}$, $R_{35}$, $R_{36}$ and $R_{37}$ are typically selected from the same or different, substituted or unsubstituted hydrocarbyl groups, such as, substituted or unsubstituted aliphatic and aromatic groups, particularly

the alkyl, alkenyl, alkynyl, aryl, alkylaryl or arylalkyl radicals having from about 1 to about 30 carbon atoms, preferably from about 1 to about 20 carbon atoms. The organic radicals $R_{38}$, $R_{39}$, $R_{40}$ and $R_{41}$ are typically selected from the same or different, substituted or unsubstituted hydrocarbyl groups, such as, substituted or unsubstituted aliphatic and aromatic groups, particularly the alkyl, alkenyl, alkynyl, aryl, alkylaryl, or arylalkyl radicals having from about 1 to about 50 carbon atoms, preferably from about 1 to about 30 carbon atoms. Preferably $R_{38}$, $R_{39}$, $R_{40}$ and $R_{41}$ are alkaryl or arylalkyl having from about 8 to about 30 carbon atoms. $y_7$ and $y_8$ are the same or different integers from 1 to 4, and $M_7$ and $M_8$ may be an organic or inorganic group, but preferably are either hydrogen or a transition metal having an atomic number from 21 to 30 or a Group IVA metal of the Periodic Table and mixtures thereof. If $M_7$ or $M_8$ is an organic radical, it is preferred that it be chosen from the group consisting of alkyl, alkenyl, alkynyl, aryl, arylalkyl, and alkaryl radicals of between 1 and 50 carbon atoms, with methyl and cyclohexyl radicals being among the most preferred groups. $M_7$ and $M_8$ may be the same physical atom or species, i.e. the two borated radicals may be attached to the same metal atom.

It should be noted that the sulfurized and polysulfurized, boron-containing, heterocyclic compounds herein have the added advantage of better oxidation stability, as well as substantially enhanced extreme pressure properties. Generally, the sulfurized and polysulfurized compounds exhibit the same or superior extreme pressure properties when used at weight percent concentrations which are half as great as other heterocyclic, boron-containing compounds disclosed herein.

Typical halogenated, boron-containing, heterocyclic compounds useful in the present invention have the formula:

The sulfurized or sulfohalogenated compounds herein are produced in accordance with the procedure described before for producing the boron-containing, heterocyclic compounds with the added stipulation that the primary amine used to form the heterocyclic compound is unsaturated. Elemental sulfur is reacted with the heterocyclic compound in toluene solvent to produce either a mono-sulfurized or polysulfurized compound, depending upon amount of sulfur added to the reaction mixture. The reaction is mildly exothermic. The sulfohalogenated form of the compound may be produced by substituting a sulfur halide for the elemental sulfur above, for example a sulfur chloride such as sulfur dichloride, etc. The halogenated form of the heterocyclic compound is produced by substituting a hydrogen halide or halogen for the sulfur above.

Typical sulfurized, boron-containing heterocyclic compounds include 1-hydroxy-3,7-diphenyl-5-(9,10-epithiostearyl)-1-bora-2,8-dioxa-5-aza-cyclooctane; 1-hydroxy-3,7-diphenyl-5-(9,10 epithiotallow)-1-bora-2,8-dioxa-5-aza-cyclooctane; 1-hydroxy-3,7-diphenyl-5-(epithiosoya)-1-bora-2,8-dioxa-5-aza-cyclooctane; and 2,6-dioctyl-3,5-di[8-(5-hydroxy-3,7-diphenyl-1-aza-4,6-diocta-5-bora-cyclooctyl)--octyl]-1,4-dithia-cyclohexane and mixtures thereof.

Sulfohalogenated, boron-containing, heterocyclic compounds include 10,10'-dithiodi[9-chloro-1-(5-hydroxy-3,7-diphenyl-1-aza-4,6-diocta-5-bora-cyclooctyl)-octadecane]; dithiodi[1-(5-hydroxy-3,7-diphenyl-1-aza-4,6-diocta-5-bora-cyclooctyl)-chlorotallow]; and dithiodi[1-(5-hydroxy-3,7-diphenyl-1-aza-4,6-diocta-5-bora-cyclooctyl)chlorosoya] and mixtures thereof. It should be noted that fluorine, bromine and iodine may be substituted for the chlorine above.

Halogenated boron-containing, heterocyclic compounds typically include 1-hydroxy-3,7-diphenyl-5-(9-10-dichlorooctadecyl)-1-bora-2,8-dioxa-5-aza-cyclooctane; 1-hydroxy-3,7-diphenyl-5-(9-10-dichlostearyl)-1-bora-2,8-dioxa-5-aza-cyclooctane; and 1-hydroxy-3,7-diphenyl-5-(dichlorotallow)-1-bora-2,8-dioxa-5aza-

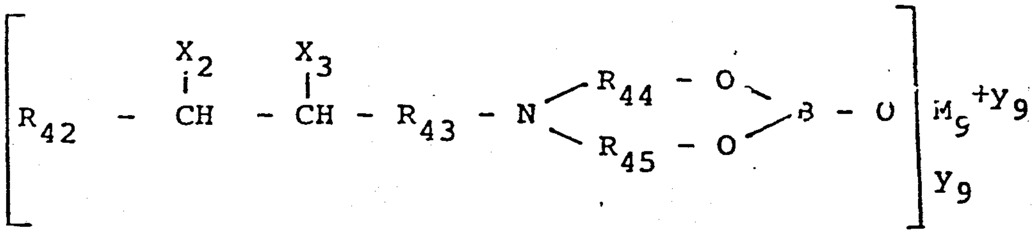

wherein $R_{42}$ may be an inorganic radical but more typically $R_{42}$ and $R_{43}$ are the same or different organic radicals having from about 1 to about 30 carbon atoms, $R_{44}$ and $R_{45}$ are the same or different organic radicals having from about 1 to about 50 carbon atoms, $X_2$ and $X_3$ are halogens selected from the group consisting of chlorine, fluorine, bromine and iodine and mixtures thereof, with chlorine and bromine being especially preferred. The radicals $R_{42}$ and $R_{43}$ are typically selected from the same or different, substituted or unsubstituted hydrocarbyl groups, such as substituted or unsubstituted aliphatic and aromatic groups, particularly the alkyl, alkenyl, alkynyl, aryl, alkylaryl or arylalkyl radicals having from about 1 to about 30 carbon atoms, preferably from about 1 to about 20 carbon atoms. The organic radicals $R_{44}$ and $R_{45}$ are typically selected from the same or different, substituted or unsubstituted hydrocarbyl groups, such as, substituted or unsubstituted aliphatic and aromatic groups, particularly the alkyl, aryl, alkylaryl or arylalkyl radicals having from about 1 to about 50 carbon atoms, preferably from about 1 to about 30 carbon atoms. Most preferably $R_{44}$ and $R_{45}$ are alkaryl or arylalkyl having from about 8 to about 30 carbon atoms. $y_9$ is an integer from 1 to 4, and $M_9$ may be an organic or inorganic group, but preferably is either hydrogen or a transition metal having an atomic number between 21 and 30 or a Group IVA metal of the Periodic Table and mixtures thereof. If $M_9$ is an organic radical, it is preferred that it be chosen from the group consisting of alkyl, alkenyl, alkynyl, aryl, arylalkyl, and alkaryl radicals of between 1 and 50 carbon atoms, with methyl and cyclohexyl radical being among the most preferred groups.

cyclooctane and mixtures thereof. Other halogens which may be substituted for the chlorine above include fluorine, bromine and iodine and mixtures thereof.

The boron-containing, heterocyclic compounds herein may be incorporated into lubricant compositions in combination with one or more additives which impart corrosion and anti-oxidant properties to said lubricant compositions. For example, additives which inhibit copper and lead corrosion, as well as, oxidation of metals may be used in the lubricant compositions herein.

In one embodiment of the present invention, copper corrosion in engine bearings is inhibited by adding to the lubrication composition a corrosion inhibiting amount, normally from 0.001 to about 5 weight percent, preferably from 0.005 to about 2.5 weight percent of a hydrocarbon polysulfide derivative of 2,5-dimercapto-1,3,4-thiadiazole having the formula:

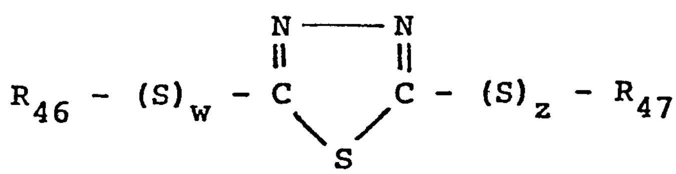

wherein $R_{46}$ and $R_{47}$ are the same or different moieties selected from hydrogen or straight or branched chain alkyl, cyclic or alicyclic alkyl, aryl, alkylaryl or arylalkyl radicals having from 2 to about 30 carbon atoms, and w and z are integers from 1 to 8. It should be noted that $R_{46}$ and $R_{47}$ cannot both be hydrogen because the compound would be rendered insoluble in lubricating oils. Thus, when $R_{46}$ is hydrogen, $R_{47}$ must be selected from one of the other moieties described above, and vice versa.

The herein-described polysulfide derivatives of 2,5-dimercapto-1,3,4-thiadiazole can be suitably prepared by several methods. For example, they can be prepared by reacting 2,5-dimercapto-1,3,4-thiadiazole with a suitable sulfenyl chloride, or by reacting the dimercaptan with chlorine and reacting the resultant disulfenyl chloride below,

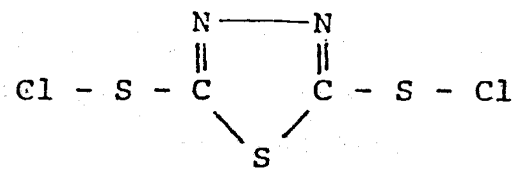

with a primary or tertiary alkylmercaptan. Bis-trisulfide derivatives are obtained by reacting the dimercaptan with a mercaptan and a sulfur chloride in molar ratios from 1:2:2 to 1:2:4 at a temperature of from about 120° F. (49° C.) to 212° F. (100° C.). Higher polysulfides may be prepared by reacting the thiodiazole di or trisulfides with sulfur at temperatures of about 200° F. (93° C.) to 400° F. (204° C.). Another method of preparing the polysulfides of the present invention involves reacting 2,5-dimercapto-1,3,4-thiadiazole with a mercaptan and sulfur in the molar ratio of from 1:1:1 to 1:4:16 at temperatures of from about 160° F. (71° C.) to about 300° F. (149° C.). The 2-mercapto, 5-alkyldithio-1,3,4-thiadiazole derivative may be prepared by reacting less than the stoichiometric amount of a primary or tertiary mercaptan with the disulfenyl chloride above to produce the bis form of the compound.

Compounds produced in accordance with the above procedure preferably are polysulfides of 1,3,4-thiadiazole-2,5-bis(alkyl, di, tri or tetra sulfide) containing from 2 to about 30 carbon atoms. Desirable polysulfides include 1,3,4-thiadiazole-2,5-bis(octyldisulfide); 1,3,4-thiadiazole-2,5-bis(octytrisulfide); 1,3,4-thiadiazole-2,5-bis(octyltetra-sulfide); 1,3,4-thiadiazole-2,5-bis-(dodecyldisulfide); 1,3,4-thiadiazole-2,5-bis(dodecyl-trisulfide); 1,3,4-thiadiazole-2,5-bis(dodecyltetra-sulfide);2-lauryldithia-5-thiaalphamethyl-styryl-1,3,4-thiodiazole; 2-lauryltrithia-5-thiaalphamethyl-styryl-1,3,4-thiodiazole; 2-mercapto-5-octyldithio-1,3,4-thiadiazole and 2-mercapto-5-dodecyldithio- 1,3,4-thiadiazole and mixtures thereof.

An especially desirable ratio of the above copper corrosion inhibitors, when two are mixed together, is from 1:20 to 20:1, preferably from 1:10 to 10:1.

A small but effective amount of terephthalic acid is the preferred lead corrosion inhibitor herein. The terephthalic acid may be prepared in accordance with conventional techniques and apparatus. For example, para-xylene may be oxidized to terephthalic acid at elevated temperature and pressure in the presence of acetic acid, a bromine promoter and a heavy metal catalyst, i.e., cobalt, manganese, etc. A second method of preparing terephthalic acid comprises reacting benzene and potassium carbonate over a cadmium catalyst at increased temperature and pressure. Generally, the terephthalic acid is incorporated into lubricating oils at a concentration of from about 0.001 to about 1 weight percent, especially from about 0.01 to about 0.05 weight percent.

The oxidation inhibitors or anti-oxidants herein have high enough molecular weights to ensure that they remain stable in a hot crankcase oil, e.g. 300° F. (149° C.) and, in addition, enhance the corrosion preventive properties of the copper and lead corrosion inhibitors by interrupting or terminating the attack of oxidants upon copper/lead-bearing metal. One type of corrosion is an oxidative process involving the loss of electrons from the corroding metal to an oxidant such as oxygen, air, nitrogen oxides, partially burned gasoline, blow-by products and the like. The oxidation inhibitors as described hereinafter are selected from the group consisting of bis(dithiobenzil) metal derivatives; sulfur bridged, bis(hindered phenols); and alkyl or diakyl, diphenylamines and mixtures thereof. These compounds effectively limit or prevent the attack of oxidants on copper/lead metal. In addition, these compounds also help to control oil oxidation as manifested by reduced sludge and varnish formation, and by reduced oil thickening.

The bis(dithiobenzil) metal derivatives herein preferably have the formula:

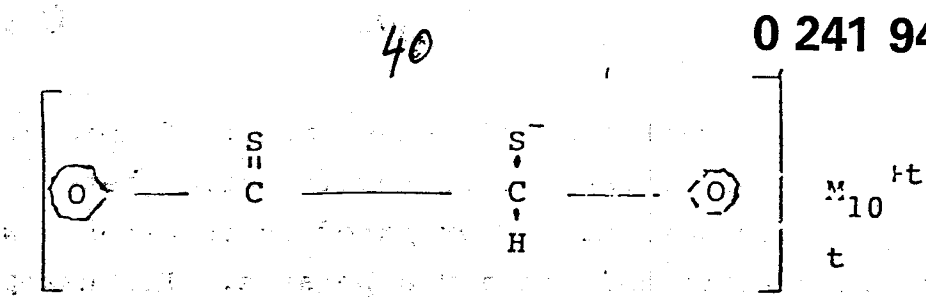

wherein $M_{10}$ is a first row transition metal and t is an integer from 1 to 4. Suitable transition metals include vanadium, chromium, manganese, iron, cobalt, nickel, copper, zinc, preferably iron, cobalt and nickel.

The bis(dithiobenzil) metal derivatives may be prepared, for example, by reacting benzoin with a phosphorus sulfide in the presence of dioxane at elevated temperature to produce the thiophosphoric ester of dithiobenzoin. The desired divalent metal, for example, metallic halide, is reacted with the above-described thiophosphoric ester of dithiobenzoin to produce the bis(dithiobenzil) metal derivative.

It should be noted that the bis(dithiobenzil) metal derivatives herein do not readily dissolve in lubricant compositions. However, when the bis(dithiobenzil) metal derivatives are mixed with the boron-containing, heterocyclic compounds herein, especially dodecylaminodi-(phenylethylate) hydrogen borate, the mixture goes into solution in lubricant compositions such as motor oils. Although the invention is not bound by any theory, it is believed that the bis(hydrocarbyloxy methylated) boron-containing, heterocyclic compound and bis(dithiobenzil) metal derivative form a complex which renders the bis(dithiobenzil) metal derivative soluble in lubricants, for example, motor oil.

The sulfur bridged, bis hindered phenols herein preferably have the formula:

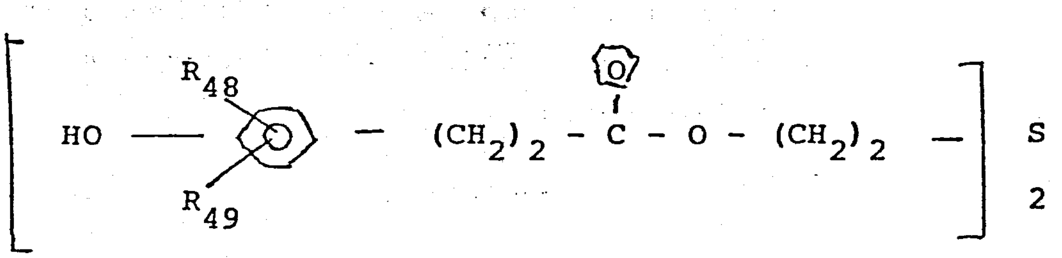

wherein $R_{48}$ and $R_{49}$ are selected from the same or different alkyl groups having from 1 to 6 carbon atoms.

In general, the sulfur bridged, bis hindered phenols are prepared by conventional esterification procedures using a suitable alcohol and an acid of the formula:

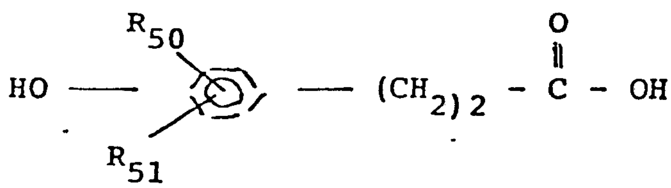

or an acid halide, acid anhydride or mixed anhydride thereof, and wherein $R_{50}$ and $R_{51}$ are as described for $R_{48}$ and $R_{49}$ before. The suitable alcohol herein preferably is thiodiglycol having the formula $(HOCH_2CH_2)_2S$ which is prepared by the hydrolysis of dichloroethyl sulfide or the interaction of ethylene chlorohydrin and sodium sulfide using conventional techniques and procedures.

Sulfur bridged, bis(hindered phenols) which are suitable for use as anti-oxidants include thiodiethyl bis(3,5-dimethyl-4-hydroxy) hydrocinnamate; thiodiethyl-bis(3,5-diethyl-4-) hydrocinnamate; thiodiethyl bis(3,5-dipropyl-4-hydroxy) hydrocinnamate; thiodiethyl bis(3,5-dibutyl-4-hydroxy) hydrocinnamate; thiodiethyl bis(3,5-di-pentyl-4-hydroxy) hydrocinnamate and thiodiethyl bis(3,5-dihexyl-4-hydroxy) hydrocinnamate and mixtures thereof.

Amines which are suitable for use as anti-oxidants or oxidation inhibitors herein have the formula:

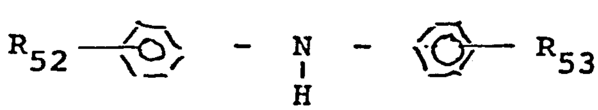

wherein $R_{52}$ and $R_{53}$ are hydrogen or the same or different alkyl radicals having from about 1 to about 30 carbon atoms, preferably from about 1 to about 20 carbon atoms, with at

least one of $R_{52}$ and $R_{53}$ being an alkyl group (most preferably unsubstituted) having from about 1 to about 30 carbon atoms.

Diphenyl amines are produced by the selfcondensation of a primary aromatic amine in the presence of a small amount of a strong mineral acid, such as anhydrous hydrochloric acid (0.5 wt. % of the amine), ferrous chloride or ammonium bromide. The reaction is carried out in a corrosion-resistant apparatus fitted with a fractionating column. The reaction temperature is maintained at 572° F. (300° C.) to produce the diphenyl amine.

Diphenyl amines are readily alkylated in the para position with compounds such as isobutylene, styrene, alpha-methylstyrene and the like using acid catalysts, for example, an acidic clay catalyst at 284° F. (140° C.).

Diphenyl amines are readily ortho-alkylated by olefins using aluminum amide as the catalyst. The olefin is reacted with the diphenyl amine at a pressure of 735 to 4,410 p.s.i.g. (49 - 299 atmospheres).

Generally, the anti-oxidants herein are incorporated into lubricant compositions at concentrations of from 0.01 to about 2 weight percent, preferably from 0.025 to about 0.10 weight percent.

The invention will be further described with reference to the following examples, which are intended to illustrate the invention, not to limit the claims.

## Example I

A boron-containing, heterocyclic compound is prepared by adding 20 grams of boric acid, 95 grams of Armak Ethomeen C/12 [bis(2-hydroxyethyl) cocoamine] and 250 ml or toluene to a single-necked one liter round-bottomed flask. The toluene acts as a solvent and as an azaeotrope for water produced during the reaction. It should be noted that boric acid is not soluble in toluene or Ethomeen C/12. The flask is placed in a heating mantle and fitted with a Dean-Stark trap that is topped with a condenser. The mixture thus

formed is then heated until it begins to reflux. Next, the mantle is adjusted to give a moderate reflux rate. The reaction mixture is refluxed for one hour, or until the stoichiometric amount of water (12 ml.) collects in the Dean-Stark trap and all of the boric acid has dissolved, after which the toluene is distilled from the reaction product. The reaction product (103 grams) is designated Boramid C/12 and has a clear golden color. Boramid C/12 is a fluid liquid while hot but sets into a soft viscous material when cooled to room temperature. The compound is readily soluble in hydrocarbon solvents and water.

Example II

A boron-containing, heterocyclic compound is prepared by the following the procedure of Example I with the following substitution:

Armak Ethomeen T/12 [bis(2-hydroxyethyl) tallowamine] is substituted for the Armak Ethomeen C/12. Substantially the same results are obtained, however, the resulting compound is designated Boramid T/12.

Example III

A boron-containing, heterocyclic compound is prepared by mixing 20 grams of boric acid, 95 grams of Armak Ethomeen 18/12 [bis(2-hydroxyethyl) octadecylamine] and, as a solvent, 250 ml of toluene in a single-necked one liter round-bottomed flask. The flask is placed in a heating mantle and fitted with a Dean-Stark trap and water-cooled condenser. The mixture is heated under reflux for one hour, during which 12 ml of water collects in the Dean-Stark trap. The toluene is then distilled from the reaction product. The compound is designated Boramid 18/12 and is readily soluble in hydrocarbon solvents and water.

Example IV

Boric acid (20 grams), N,N-diethanol-N-phenylamine (46.3 grams) and 250 mls of toluene are mixed in a one liter single-necked flask to prepare a boron-containing,

heterocyclic compound. The flask is equipped with a heating mantle, Dean-Stark trap and water-cooled condenser. The mixture is heated under reflux until the reaction is completed (12 ml of water collects), approximately one hour, and the toluene is distilled from the reaction mixture. The product thus prepared is suitable for use an extreme pressure, antiwear and friction reducing additive for lubrication compositions.

Example V

A metal derivative of Boramid C/12 is prepared by mixing 54 grams of the product of Example I (Boramid C/12), 400 ml of toluene, 24.6 grams of nickel acetate and 150 ml of methanol in a single-necked, one liter round-bottomed flask which is equipped with a heating mantle and water-cooled condenser. The mixture is refluxed for four hours. Next, water, toluene, methanol and acetic acid are distilled from the reaction product. The product (59 grams) contained 7.8 weight percent nickel as determined by emission spectroscopy and the resulting product is a fluid green liquid when hot, which turns into a solid upon cooling to room temperature. The product is readily soluble in hydrocarbon solvents and water, for example, isopropyl alcohol.

Example VI

A copper-heterocyclic compound is prepared by adding 62 grams of boron-containing, heterocyclic C/12, 150 ml of toluene, 50 ml of water and 18.2 grams of cupric acetate to a 500 ml., single necked round bottom flask equipped with a Dean-Stark trap and condenser. The mixture is refluxed for 8 hours, after which, water, toluene and produced acetic acid (from acetate) are distilled leaving 68 grams of a green solid.

The additive and/or lubricant composition is tested in accordance with the procedure disclosed in ASTM D3233-73 (Reapproved 1978) using a Falex lubricant tester. The test, in accordance with the above ASTM designation, is

performed by applying resistance to a revolving metal journal. A rachet mechanism movably attached to two V-blocks applies resistance by steadily increasing pressure on the journal. The metal journal and V-blocks (steel) are submerged in the lubricant composition to be tested.

Table 1

Torque on Journal, lb.-in (Newtons-Meters)

| True Load lbs | | SAE 10W/40 (a) Without Additive | SAE 10W/40 With 1% Boramid C-12 | SAE 10W/40 With 1% Boramid T-12 |
|---|---|---|---|---|
| 100 | (445) | 8 (0.904) | 7 1/2 (0.847) | 7 1/2 (0.847) |
| 250 | (1,112) | 12 (1.356) | 10 (1.130) | 9 (1.017) |
| 500 | (2,224) | 19 (2.147) | 15 (1.695) | 14 (1.582) |
| 750 | (3,336) | 22 (2.486) | 18 (2.034) | 19 (2.146) |
| 1,000 | (4,448) | 25 (2.825) | 22 (2.486) | 22 (2.486) |
| 1,250 | (5,560) | 35 (3.954) | 25 (2.825) | 25 (2.825) |
| 1,500 | (6,672) | Journal Shear | 27 (3.050) | 27 (3.050) |
| 1,750 | (7,784) | ------- | Journal Shear | 33 (3.728) |
| 2,250 | (10,008) | ------ | ------- | Journal Shear |

(a) Union Super Motor Oil, marketed commercially by the Union Oil Company of California.

## Example VII

A metal-boramid is prepared by following the procedure of Example VI with the following changes: 31 grams of Boramid C/12 is mixed with 19 grams of lead (II) acetate, 150 ml. of toluene and 25 ml of methanol. The mixture is refluxed for 2 hours, after which, the toluene, methanol, water and acetic acid (produced from acetate) are distilled using conventional techniques and apparatus. The resulting lead-Boramid C/12 product (32.6 grams) is a golden colored oil with the consistency of honey.

Table 2

Torque on Journal lbs.-in (Newton-Meters)

| True Load lbs. (Newtons) | 450 Neutral Oil-with Copper-Boramid C/12 | 430 Neutral Oil Without Additive | ASTM 10W - 40 |
|---|---|---|---|
| 300 (1,334) | 9 (1.017) | 10 (1.130) | - |
| 500 (2,224) | 11 (1.243) | 15 (1.695) | 17 (1.921) |
| 750 (3,336) | 17 (1.921) | 23 (2.599) | 21 (2.373) |
| 1,000 (4,448) | 20 (2.260) | Journal Shear | 28 (3.163) |
| 1,250 (5,560) | 28 (3.163) | | 33 (3.728) |
| 1,500 (6,672) | 55 (6.214) | | Journal Shear |
| 1,750 (7,784) | 55 (6.214) | | |
| 2,000 (8,896) | 55 (6.214) | | |
| 2,250 (10,008) | 60 (6.779) | | |
| 2,500 (11,120) | 70 (7.909) | | |
| 2,750 (12,232) | 75 (8.474) | | |
| 3,000 (13,344) | 80 (9.038) | (Stopped for inspection) | |

Example VIII

A lubricant composition containing nickel-Boramid C/12 an 450 neutral oil is tested for extreme pressure, anti-wear and friction reducing properties in a 1973 Chevrolet 350 cu. in. displacement V-8 engine which is run continuously for 196 hours on a single fill of the lubricating composition. The lubricating oil does not contain conventional zinc dialkydithiophosphate anti-wear additives. The lubricant composition is disclosed in detail in Table 3 below.

Table 3

| Compound | Weight Percent |
|---|---|
| 450 neutral oil | 89.945 |
| Boramid C/12 | 2.500 |
| Nickel-Boramid C/12 | 2.500 |
| Oronite OLOA 1200 [(A)] | 4.000 |
| Chlorowax 40 [(B)] | 1.000 |
| UNAD 242 [(C)] | 0.010 |
| Terephthalic Acid [(D)] | 0.025 |
| Quinizarin [(E)] | 0.020 |

(A) Oronite OLOA 1200 - alkyl succinimide type ashless dispersant.

(B) Chlorowax 40 - Chlorided paraffin containing 40% chlorine.

(C) UNAD 242 - Silicone type defoamant containing kerosene.

(D) Terephthalic acid - Corrosion inhibitor.

(E) Quinizarin - Antioxidant.

The Chevrolet engine is programmed to run in a repeating cycle that averaged approximately 40 MPH. The cycle is disclosed in Table 4 below.

Table 4

| Cycle | RPM | Speed MPH (Kilometers/Hr.) | Time (MIN.) |
|---|---|---|---|
| 1 | 700 | 0 (0) | 2.0 |
| 2 | 1700 | 45 (72.4) | 3.0 |
| 3 | 1200 | 30 (48.3) | 4.0 |
| 4 | 2225 | 60 (96.5) | 0.12 |
| 5 | 2400 | 65 (104.6) | 3.0 |

After the 196 hour engine test is completed, several areas in the engine which are subject to wear are closely examined. These areas include: main bearings, top end bearings, cam shaft bearings, valve lifters and cam shaft lobes.

The length of the engine run is equivalent to approximately 8,000 miles of driving. A detailed examination of the above-described components indicated no abnormal or excessive wear.

Example IX

The boron-containing, heterocyclic compound, 1-hydroxy,7-diphenyl-5-coco-5-aza-1-bora-2,8-dioxacyclooctane, is prepared by adding 14,889 grams of cocoamine(1) and 17,516 grams of styrene oxide to a 65 liter round bottomed flask that contains 13 liters to toluene and 1 liter of water. The flask if placed in a heating mantle and fitted with a water-cooled condenser. The mixture thus formed is heated until it begins to reflux. Next, the temperature is adjusted to give a moderate reflux rate and the reaction mixture is refluxed for 24 hours. The reaction mixture is cooled to room temperature and 4,595 grams of boric acid are added to the flask. Then, the flask is equipped with a Dean-Stark trap topped with a water-cooled condenser and the reaction mixture is refluxed until water stops collecting in the trap. Toluene is distilled from the reaction product at a temperature of 400° F. (204° C.). The reaction produces 34,373 grams of 1-hydroxy-3,7-diphenyl-5-coco-5-aza-1-bora-2,8-dioxacyclooctane.

(1) Cocoamine is a mixture of primary amines consisting of approximately 52 percent dodecylamine, 19 percent of tetradecylamine, 9 percent of hexadecyl amine, 6.5 percent of octylamine, 6 percent of decylamine, 2 percent of octadecyl amine and 5 percent of a mixture of octadecenylamine and octadecadienylamine. Cocoamine is produced commercially by the Armak Company under the tradename of Armeen CD.

Example X

A boron-containing, heterocyclic compound is prepared by adding 17,605 grams of tallowamine(2) and 15,362 grams of styrene oxide to a 65 liter round bottomed flask that contains 11.34 liters of toluene and 1 liter of water. The flask is fitted with a water-cooled condenser and placed in a heating mantle. The mixture thus formed is refluxed at a

moderate rate for 24 hours. The reaction is cooled to room temperature and 4,033 grams of boric acid are added to the flask. Next, the flask is fitted with a Dean-Stark trap, topped with a water-cooled condenser and the reaction mixture isrefluxed until water stops collecting in the trap. Toluene isdistilled from the reaction product at a temperature of 400° F. (204° C.). The reaction produces 34,695 grams of 1-hydroxy-3,7-diphenyl-5-tallow-5-aza-1-bora-2,8-dioxacyclooctane.

(2) Tallowamine is a mixture of amines consisting of approximately 29 percent hexadecylamine, 20.5 percent octadecylamine, 44 percent of a mixture of octadecenylamine and octadecadienylamine, 3 percent tetradecylamine, 1.5 percent hexadecenylamine, 1 percent heptadecylamine and 0.5 percent tetradecenylamine. Tallowamine is produced commercially by the Armak Company under the tradename Armeen T.

## Example XI

A copper derivative of 1-hydroxy-3,7-diphenyl-5-coco-5-aza-1-bora-2,8-dioxacyclooctane is prepared by following the procedure Example IX with the following exception: the above-described compound (47 grams), 100 ml of toluene, 20 ml of triethyl amine and 10 grams of cupric acetate are mixed in a single-necked, 500 ml round-bottomed flask, equipped with a heating mantle and water-cooled condenser. The mixture is refluxed for 16 hours, then filtered and the toluene, amine, water and acetic acid (produced in situ) are distilled from the reaction product. Using the above-procedure, copper di[-1-oxy-3,7-diphenyl-5-dodecyl-5-aza-1-bora-2,8-dioxacyclooctane] is produced.

It is to be noted that other transition metals having an atomic number from 21 to 30, and Group IVA metals of the periodic table may be substituted for the copper metal herein to prepare corresponding metal derivatives of the above compound.

Example XII

Lead di[-1-oxy-3,7-diphenyl-5-coco-5-aza-1-bcra-2,8-dioxacyclooctane] is prepared in accordance with the procedure of Example I with the following exception:

The reaction product produced in Example I (23.5 grams), 100 ml of toluene, 9.5 grams of lead acetate and 100 ml of triethylamine are mixed in a single-necked 500 ml round bottomed flask, equipped with a water-cooled condenser and heating mantle. The mantle heat is adjusted until a moderate rate of reflux is obtained. The mixture thus formed is refluxed for 18 hours. Next, the mixture is filtered, toluene, water, triethylamine and acetic acid (produced in the reaction) are distilled from the reaction product. The reaction produces lead di[-1-oxy-3,7-diphenyl-5-dodecyl-5-bora-2,8-dioxacyclooctane.

Example XIII

Iron di(-1-oxy-3,7-diphenyl-5-coco-5-aza-1-bora-2,8-dioxacyclooctane) is prepared according to the procedure of Example I with the following exception:

A mixture comprising 23.5 grams of the reaction product produced in Example I, 100 ml of toluene, 4.3 grams of ferrous acetate and 100 ml of triethylamine are introduced into a single-necked 500 ml round-bottomed flask, equipped with a water-cooled condenser and heating mantle and Dean-Stark trap.

Example XIV

Zinc di[-1-oxy-3,7-diphenyl-5-coco-5-aza-1-bora-2,8-dioxacyclooctane] is produced according to the procedure of Example XI except that zinc acetate is substituted for the cupric acetate.

Example XV

Tin di[-1-oxy-3,7-diphenyl-5-coco-5-aza-1-bora-2,8-dioxacyclooctane] is prepared by substituting tin acetate for the cupric acetate in Example XI.

Examples XVI to XXII

Extreme pressure, anti-wear and friction reducing additives produced according to the procedure of Examples IX, XI, XII, XIII, XIV and XV are mixed with separate portions of 450 neutral oil at concentrations of 2 weight percent.

Each lubricant composition is tested in accordance with the procedure disclosed in ASTM:D3233-73 (Reapproved 1978) using a Falex lubricant tester. The test, in accordance with the above ASTM designation, is performed by applying resistance to a revolving metal journal. A rachet mechanism movably attached to two V-blocks applies resistance by steadily increasing pressure on the journal. The metal journal and V-blocks (steel) are submerged in the lubricant composition to be tested. A summary of the results obtained is disclosed in Table 5 below:

Table 5

TORQUE ON JOURNAL LB.-IN. (NEWTONS-METERS)

| Example | XVI | XVII | XVIII | XIX | XX | XXI | XXII |
|---|---|---|---|---|---|---|---|
| True Load lbs. (Newtons) | (450 Neutral Oil) | Oil with Additive of Ex. IX | Oil with Additive of Ex. XI | Oil with Additive of Ex. XII | Oil with Additive of Ex. XIII | Oil with Additive of Ex. XIV | Oil with Additive of Ex. XV |
| 300 (1,334) | 9 (1.017) | 7 (0.791) | 11 (1.243) | 9 (1.017) | 10 (1.130) | 9 (1.017) | 7 (0.791) |
| 500 (2,224) | 12 (1.356) | 9 (1.017) | 15 (1.695) | 15 (1.695) | 15 (1.695) | 14 (1.582) | 9 (1.017) |
| 750 (3,336) | Journal Shear | 17 (1.921) | 21 (2.373) | 21 (2.373) | 22 (2.486) | 22 (2.486) | 16 (1.808) |
| 990 (4,404) | ----- | ----- | ----- | ----- | ----- | Journal Shear | ----- |
| 1,000 (4,448) | ----- | 24 (2.712) | 28 (3.163) | 30 (3.389) | 28 (3.163) | ----- | 19 (2.147) |
| 1,050 (4,670) | ----- | ----- | Journal Shear | Journal Shear | Journal Shear | ----- | 23 (2.599) |
| 1,250 (5,560) | ----- | Journal Shear | ----- | ----- | ----- | ----- | 26 (2.937) |
| 1,500 (6,672) | ----- | ----- | ----- | ----- | ----- | ----- | Journal Shear |
| 1,750 (7,784) | | | | | | | |

The above data indicate that the boron-containing, heterocyclic compounds described above impart extreme pressure properties to 450 neutral oil at concentrations of 2 weight percent.

Example XXIII

A copper corrosion inhibitor comprising 1,3,4-thiodiazole-2,5-bis(dodecyldisulfide) is prepared by chlorinating 284 grams of n-dodecyl mercaptan in 0.6 liter of carbon tetrachloride with 1.47 moles of chlorine over a two hour period at a temperature of about 23° F. (-5° C.) to about 32° F. (0° C.). Next, sulfenyl chloride which forms as a reaction product is stripped with nitrogen to remove hydrogen chloride, and the resultant compound is added to 86 grams of a 2,5-dimercapto-1,3,4-thiadiazole slurry. The mixture is heated at 86° F. (30° C.) for 1 1/2 hours and the resultant compound (1,3,4-thiadiazole-2,5-bis(dodecyldisulfide) is recovered by washing with water and sodium bicarbonate and vacuum stripping to remove carbon tetrachloride.

Example XXIV

The procedure of Example XXII is followed to prepare 1,3,4-thiodiazole-2,5-bis (octyldisulfide) with the following exception: octyl mercaptan is substituted for the dodecylmercaptan.

Example XXV

The oxidation inhibitor, thiodiethyl bis-(3,5-di-t-butyl-4-hydroxy) hydrocinnamate is prepared by melting together 17.95 weight percent of B,B'-dihydroxy-diethyl sulfide, 81.41 weight percent of (3,5-di-t-butyl-4-hydroxy) hydrocinnamate acid and 0.64 weight percent of sodium methylate under a nitrogen atmostphere at 266° F. (130° C.) for two and one-half hours. Methanol thus formed is separated from the reaction mixture and condensed in a dry-ice trap using nitrogen gas as a carrier. The reactants are heated at 149° F. (65° C.) for three hours and the reaction product is dissolved in warm benzene, filtered and the benzene filtrate is washed three times with saturated sodium chloride solution. The filtrate is, next, dried over anhydrous sodium sulfate and the solvent evaporated using convention techniques. Thiodiethyl bis-(3,5-di-t-butyl-4-hydroxy) hydrocinnamate is isolated and purified by

successive recrystallization from hexane and a mixture of hexane and t-butanol.

Example XXVI

The oxidation inhibitor, bis(dithiobenzil) iron (II) is prepared by adding 400 grams of benzoin and 600 grams of phosphorous sulfide to a single-necked 5 liter, round bottomed flask equipped with heating mantle and water-cooled condenser and containing 1,500 ml of dioxane. The mixture thus formed is refluxed for two hours. Next, 200 grams of hydrated ferrous chloride dissolved in 500 ml of water is added to the 5 liter flask and the mixture is heated on a steam bath at 212° F. (100° C.) for 2 hours. The reaction product thus formed (169.5 grams) is filtered and washed with methanol.

Example XXVII

Dodecylamino di(phenylethylate) hydrogen borate is prepared by adding 34.85 pounds (15,808 grams) of dodecylamine (1 equivalent) and 41.0 pounds (18,597 grams) of styrene oxide (2 equivalents) to a 17 U.S. gallon (64.3 liters) round bottomed flask equipped with a water-cooled condenser and containing 3 U.S. gallons (11.36 liters) toluene and 1 liter of water. The reaction is exothermic and begins immediately upon addition of the above reactants. Additional heat is applied and the reaction mixture is refluxed for a total of 24 hours, however, as little as 2 hours may result in complete reaction. The reaction is cooled to room temperature, 10.49 pounds (4,758.16 grams) of boric acid (1 equivalent) is added and the flask is equipped with a Dean-Stark trap. Heat is again applied and the reaction mixture refluxed until water stops collecting in the trap. Toluene is, then, distilled from the reaction product at a temperature of 400° F. (204° C.) or less. About 6 liters of water collect in the Dean-Stark trap. The reaction produces approximately 75 pounds (34,019 grams) of product and is designated as H-boramid-HDS.

Examples XXVIII to XXXIII

A lubricant composition containing H-Boramid-CD-S, 1,3,-4-thiodiazole-2,5-bis(octyldisulfide), terephthalic acid, and thiodiethyl bis-(3,5-di-t-butyl-4-hydroxy) hydrocinnamate is tested for copper and lead corrosion inhibition and anti-oxidant properties using a single-cylinder Labeco CLR Test Engine equipped with sintered copper (65 wt. %)/lead (35 wt. %) connecting rod bearings, in accordance with the procedure of Federal Test Method Standard No. 791B, method 3405.2.

The copper lead corrosion tests are conducted in accordance with the test conditions of Table 6 below:

Table 6

Operating Conditions

| | |
|---|---|
| Test Duration, Hours | 40 |
| Speed, RPM | 3150 ± 25 |
| Load, BHP | 6.5a |
| (KW) | (4.85) |
| Fuel, Flow, Lb/Hr. | 4.75 ± 0.25 |
| (g/Hr.) | (2,155 ± 5) |
| Air/Fuel Ratio | 14.0 ± 0.5 |
| Jacket Outlet Coolant Temp.,°F. | 200 ± 2 |
| (°C.) | (93.33 ± 1.11) |
| Gallery Oil Temp., °F. | 290 ± 2 |
| (°C.) | (143.33 ± 1.11) |
| Spark Advance, BTDC | 35 ± 1 |
| Oil Pressure, PSIG | 40 ± 2 |
| (atmospheres) | (3.72) |
| Crankcase Vacuum, in. $H_2O$ | 2 ± 0.5 |
| (cm. $H_2O$) | (5.08 ± 1.27) |
| Exhaust Back Pressure, in. Hg. | 0.5 ± 0.5 |
| (cm. Hg) | (1.27 ± 1.27) |
| Crankcase Off-Gas, CFH | 30 ± 1 |
| (CMH) | (0.83 ± .03) |
| Oil Charge, Pints | 3.5 |
| (Liters) | (1.66) |

The test is conducted by charging 3.5 pints (1.66 liters) of the test lubricant to the engine sump. Test duration consists of 40 hours operation at the prescribed test conditions of Table 6 above. When the prescribed gallery oil temperature is reached, the test time begins. Interim oil adjustments are made at the end of 10, 20 and 30 hours of test operation. A copper/lead bearing weight loss of about 40 mg of lower is considered acceptable. All of the tests are conducted using SAE 30 motor oil containing the additives and/or compounds, including concentrations in Table 7 below.

Table 7

| Example | H-Boramid-CDS (A) (Wt. %) | Copper Corrosion Inhibitor (B) (Wt. %) | Terephthalic Acid (Wt. %) | Anti-Oxidant (C) (Wt. %) | Phosphorous (Wt. %) | Amoco (D) PCO-059 | CRC L-30 Engine Test 40 hours (BWL, mg) (E) |
|---|---|---|---|---|---|---|---|
| XVIII | 2.12 | ----- | ----- | ----- | 0.05 | 6.5 | 93 |
| XVIX | 2.12 | 0.050 | 0.05 | ----- | 0.05 | 6.5 | 43.0 |
| XXX | 2.12 | 0.075 | 0.05 | ----- | 0.05 | 6.5 | 40.0 |
| XXXI | 2.12 | 0.075 | 0.05 | ----- | 0.05 | 6.5 | 33.4 |
| XXXII | 2.12 | 0.03 | 0.03 | ----- | 0.05 | 6.5 | 38 |
| XXXIII | 2.12 | 0.075 | 0.05 | 0.05 | 0.05 | 6.5 | 26.4 |

(A) H- Boramid CDS = dodecylamino di(phenylethylate) hydrogen borate.

(B) Copper Corrosion Inhibitor = A mixture of 83 weight percent 1,3,4-thiodiazole-2,5-bis(octyldisulfide) and 17 weight percent of 2 mercapto-5 octyldithio-1,3,4-thiadiazole, marketed under the Tradename of Amoco 150 by the Amoco Oil Company.

(C) Anti-oxidant = thiodiethyl bis-(3,5-di-t-butyl-4-hydroxy) hydrocinnamate.

(D) Amoco PCO-059 = detergent/dispersant package marketed commercially by the Amoco Oil Company.

(E) BWL = bearing weight loss.

Examples XXXIV to XXXVIII

The procedure of Examples XXVIII to XXXIII is used to test a lubrication composition for copper and lead corrosion inhibition and anti-oxidant properties with the following exception: bis(dithiobenzil) iron is substituted for thiodiethyl bis(3,5-di-t-butyl-4-hydroxy) hydrocinnamate as an anti-oxidant. All the tests are conducted using SAE 30 motor oil containing the additives and/or compounds, including concentrations in Table 8 below:

Table 8

| Example | H-Boramid-CDS (A) (Wt. %) | Copper Corrosion Inhibitor (B) (Wt. %) | Terephthalic Acid (Wt. %) | Anti-Oxidant (C) (Wt. %) | Phosphorous (Wt. %) | Amoco (D) PCO-059 | CRC L-30 Engine Test 40 hours (BWL, mg) (E) |
|---|---|---|---|---|---|---|---|
| XXXIV | 2.12 | ----- | ----- | ----- | 0.05 | 6.5 | 93 |
| XXXV | 2.12 | 0.050 | 0.05 | ----- | 0.05 | 6.5 | 43.0 |
| XXXVI | 2.12 | 0.075 | 0.05 | ----- | 0.05 | 6.5 | 40.0 |
| XXXVII | 2.00 | 0.03 | 0.03 | ----- | 0.05 | 6.5 | 38 |
| XXXVIII | 2.12 | 0.075 | 0.05 | 0.05 | 0.05 | 6.5 | 34.8 |

(A) H- Boramid CDS = dodecylamino di(phenylethylate) hydrogen borate.

(B) Copper Corrosion Inhibitor = A mixture of 83 weight percent 1,3,4-thiodiasole-2,5-bis(octyldisulfide) and 17 weight percent of 2 mercapto-5 octyldithio-1,3,4-thiadiazole, marketed under the Tradename of Amoco 150 by the Amoco Oil Company.

(C) Anti-oxidant = thiodiethyl bis-(3,5-di-t-butyl-4-hydroxy) hydrocinnamate.

(D) Amoco PCO-059 = detergent/dispersant package marketed commercially by the Amoco Oil Company.

(E) BWL = bearing weight loss.

Example XXXIX

The bis(hydrocarbyloxy methylated) boron-containing heterocyclic compound, 1-hydroxy-3,7-di(methyl phenoxy methyl)-5-coco-5-aza-1-bora-2,8-dioxacyclooctane, is prepared by adding 278.5 grams of cocoamine[(1)] and 450.5 grams of cresyl glycidyl ether to a 2-liter round-bottomed flask that contains 250 ml of toluene and 22 ml of water. The flask is placed in a heating mantle and fitted with a water-cooled condenser. The mixture thus formed is heated until it begins to reflux. Next, the temperature is adjusted to give a moderate reflux rate and the reaction mixture is refluxed for 18 hours. The reaction mixture is cooled to room temperature and 86.0 grams of boric acid are added to the flask. Then, the flask is equipped with a Dean-Stark trap topped with a water-cooled condenser and the reaction mixture is refluxed until water stops collecting in the trap. Toluene is distilled from the reaction product at a temperature of 400° F. (204° C.). The reaction produces 758.5 grams of 1-hydroxy-3,7-(methyl phenoxy methyl)-5-coco-5-aza-1-bora-2,8-dioxacyclooctane.

(1) Cocoamine is a mixture of primary amines consisting of approximately 52 percent dodecylamine, 19 percent of tetradecylamine, 9 percent of hexadecyl amine, 6.5 percent of octylamine, 6 percent of decylamine, 2 percent of octadecyl amine and 5 percent of a mixture of octadecenylamine and octadecadienylamine. Cocoamine is produced commercially by the Armak Company under the tradename of Armeen CD.

Example XL

The bis(hydroxycarbyloxy methylated) boron-containing, heterocyclic compound, 1-hydroxy-3,7-di(methyl phenoxy methyl)-5-oleyl-5-aza-1-bora-2,8-dioxacyclooctane, is prepared by adding 55.6 grams of oleyl amine and 66.0 grams of cresyl glycidyl ether to a 1-liter round-bottomed flask that contains 250 ml of toluene. The flask is placed in a heating mantle and fitted with a water-cooled condenser.

The mixture thus formed is heated until it begins to reflux. Next, the temperature is adjusted to give a moderate reflux rate and the reaction mixture is refluxed for 18 hours. The reaction mixture is cooled to room temperature and 12.4 grams of boric acid are added to the flask. Then, the flask is equipped with a Dean-Stark trap topped with a water-cooled condenser and the reaction mixture is refluxed until water stops collecting in the trap. Toluene is distilled from the reaction product at a temperature of 400° F. The reaction produces 97 grams of 1-hydroxy-3,7-(methyl phenoxy methyl)-5-oleyl-5-aza-1-bora-2,8-dioxacyclooctane.

Example XLI

The compound, 1-hydroxy-3,7-di(methyl phenoxy methyl)-5-dodecyl-5-aza-1-bora-2,8-dioxacyclooctane, is prepared in accordance with the procedure of Example XXXIX with the following exception: one mole of dodecylamine is substituted for each mole of cocoamine used.

Example XLII

The compound, 1-hydroxy-3,7-di(methyl phenoxy methyl)-5-tallow-5-aza-1-bora-2,8-dioxacyclooctane, is prepared in accordance with the procedure of Example XL with the following exception: one mole of tallowamine[(2)] is substituted for the oleyl amine.

(2) Tallowamine is a mixture of amines consisting of approximately 29 percent hexadecylamine, 20.5 percent octadecylamine, 44 percent of a mixture of octadecenylamine and octadecadienylamine, 3 percent tetradecylamine, 1.5 percent hexadecenylamine, 1 percent heptadecylamine and 0.5 percent tetradecenylamine. Tallowamine is marketed commercially by the Armak Company under the trademark Armeen T.

## Example XLIII

A copper derivative of 1-hydroxy-3,7-di(methyl phenoxy methyl)-5-coco-5-aza-1-bora-2,8-dioxacyclooctane is prepared by following the procedure of Example I with the following exception: the above descrbibed compound (47 grams), 100 ml of toluene, 20 ml of triethyl amine and 10 grams of cupric acetate are mixed in a single-necked, 500 ml round bottom flask, equipped with a heating mantle, Dean-Stark trap and water-cooled condenser. The mixture is refluxed for 16 hours, then filtered and the toluene, amine, water and acetic acid (produced in situ) are distilled from the reaction product. Using the above procedure, copper di[1-oxy-3,7-di(methyl phenoxy methyl)-5-dodecyl-5-aza-1-bora-2,8-dioxacyclooctane] is produced.

## Example XLIV to XLIX

The compound 1-hydroxy-3,7-di(methyl phenoxy methyl)-5-coco-5-aza-1-bora-2,8-dioxacyclooctane produced in accordance with the procedure of Example XXXIX is tested for extreme pressure, anti-wear and friction reducing properties admixed with separate portions of 450 neutral oil and SAE 30 motor at concentrations of 1 and 2 weight percent respectively.. Samples of 450 neutral oil and SAE 30 motor oil without the compound 1-hydroxy-3,7-di(methyl phenoxy methyl)-5-coco-5-aza-1-bora-2,8-dioxacyclooctane serve as controls of the experiments.

Each lubricant composition is tested in accordance with the procedure disclosed in ASTM:D3233-73 (Reapproved 1978) using a Falex lubricant tester. The test, in accordance with the above ASTM designation, is performed by applying resistance to a revolving metal journal. A rachet mechanism movably attached to two V-blocks applies resistance by steadily increasing pressure on the journal. The metal journal and V-blocks(steel) are submerged in the lubricant composition to be tested. A summary of the results obtained is disclosed in Table 9 below:

Table 9

TORQUE ON JOURNAL LB.-IN. (NEWTONS-METERS)

| Example True Load Lbs. (Newtons) | XLIV 450 Neutral Oil | XLV 450 Neutral Oil with 1 wt.% Additive of Ex. XXXIX | XLVI 450 Neutral Oil with 2 wt.% Additive of Ex. XXXIX | XLVII SAE 30 Motor oil | XLVIII SAE 30 Motor Oil with 1 wt.% Additive of Ex. XXXIX | XLIX SAE 30 Motor Oil with 2 wt.% Additive of Ex. XXXIX |
|---|---|---|---|---|---|---|
| 300 (1,334) | 8 (0.904) | 7 (0.791) | 6 (0.678) | 12 (1.356) | 7 (0.791) | 8 (0.904) |
| 500 (2,224) | 14 (1.582) | 10 (1.130) | 10 (1.130) | 17 (1.921) | 12 (1.356) | 11 (1.243) |
| 600 (2,669) | xxx (1) | - | - | - | - | - |
| 750 (3,336) | | 18 (2.034) | 17 (1.921) | 30 (3.389) | 16 (1.808) | 15 (1.695) |
| 800 (3,558) | | - | - | xxx | - | - |
| 1,000 (4,448) | | xxx | 20 (2.260) | | 25 (2.825) | 20 (2.260) |
| 1,100 (4,893) | | | xxx | | - | - |
| 1,250 (5,560) | | | | | xxx | 26 (2.937) |
| 1,500 (6,672) | | | | | | xxx |

(1) xxx indicates failure occurred with the journal scoring and the shear pin breaking.

As shown in Table 9, the addition of 1-hydroxy-3, 7-di(methyl phenoxy methyl)-5-coco-5-aza-1-bora-2,8-dioxa-cyclooctane to 450 neutral oil and SAE 30 motor oil at concentrations of one and two weight percent respectively, imparts extreme pressure properties to the oils.

Example L

A lubricant composiiton is tested for friction reducing properties and copper and lead corrosion inhibition properties using a single-cylindered Labeco CLR Test Engine equipped with sintered copper (65 wt. %)/lead (35 wt. %) connecting rod bearings, in accordance with the procedure of Federal Test Method Standard No. 791B, Method 3405.2.

The test is conducted in accordance with the test conditions of Table 10 below:

Table 10

Operating Conditions

| | |
|---|---|
| Test Duration, Hours | 40 |
| Speed, RPM | 3150 ± 25 |
| Load, BHP (KW) | 6.5a (4.85) |
| Fuel Flow, Lb/Hr.<br>(gm/Hr.) | 4.75 ± 0.25<br>(2,155 ± 114) |
| Air/Fuel Ratio | 14.0 ± 0.5 |
| Jacket Outlet Coolant Temp., °F.<br>(°C.) | 200 ± 2<br>(93.33 ± 1.11) |
| Gallery Oil Temp., °F.<br>(°C.) | 290 ± 2<br>(143.33 ± 1.11) |
| Spark Advance, BTDC | 35 ± 1 |
| Oil Pressure, PSIG<br>(atmospheres) | 40 ± 2<br>(3.72) |
| Crankcase Vacuum in. $H_2O$<br>(cm. $H_2O$) | 2 ± 0.5<br>(5.08 ± 1.27) |
| Exhaust Back Pressure, in. Hg.<br>(cm. Hg) | 0.5 ± 0.5<br>(1.27 ± 1.27) |
| Crankcase Off-Gas, CFH<br>(CMH) | 30 ± 1<br>(0.85 ± 0.03) |
| Oil Charge, Pints (Liters) | 3.5 (1.66) |

The results are summarized in Table 11 below:

Table 11

| Example | Compound of Example XXXIX (Wt.%) | Copper Corrosion Inhibitor (B) (Wt.%) | Terephthalic Acid (Wt.%) | Anti-Oxidant (C) (Wt.%) | Amoco (D) PCO-059 | CRC L-30 Engine Test 40 hours (BWL,mg) (E) |
|---|---|---|---|---|---|---|
| L | 2.830 | 0.075 | 0.050 | 0.050 | 7.050 | 30.1 |

(A) 1-hydroxy-3,di(methyl phenoxy)methyl-5-coco-5-aza-1-bora-2,8-dioxacyclooctane

(B) Copper Corrosion Inhibitor = A mixture of 83 weight percent 1,3,4-thiodiazole-2,5-bis(octyldisulfide) and 17 weight percent of 2 mercapto-5octyldithio-1,3,4-thiadiazole, marketed by the Amoco Oil Company under the trademark of Amoco 150.

(C) Anti-oxidant = thiodiethyl bis(3,5-di-t-butyl-4-hydroxy) hydrocinnamate.

(D) Amoco PCO-059 = detergent/dispersant package marketed commercially by the Amoco Oil Company.

(E) BWL = bearing weight loss.

The test is conducted by charging 3.5 pints (1.7 liters) of the test lubricant to the engine sump. Test duration consists of 40 hours operation at the prescribed test conditions of Table 11 above. When the prescribed gallery oil temperature is reached, the test time begins. Interim oil adjustments are made at the end of 10, 20 and 30 hours of test operation. A copper/lead bearing weight loss of about 40 mg or lower is considered acceptable.

Example LI

A lubricant composition containing 450 neutral oil, 1-hydroxy-3,7-diphenyl-5-coco-5-aza-1-bora-2,8-dioxaclo-octane, and octyl diphenyl amine is tested for extreme pressure properties, and resistance to oxidation stability, and corrosion using a single-cylinder Labeco CLR Test Engine equipped with sintered copper (65 wt.%)/lead (35 wt.%) connecting rod bearings, in accordance with the procedure ASTM STP 509A, Part IV and the engine operating condition of Example L.

The results are summarized in Table 12 below:

Table 12

| Example | E.P. Additive (A) (wt. %) | Anti-oxidant (B) (wt. %) | Copper Corrosion (C) Inhibitor (wt. %) | OLOA 267 (D) (wt. %) | AMOCO (E) PCO-059 (wt. %) | UNAD (F) 242 (wt. %) | CRC L-30 Engine Test 40 hours (BWL, mg) (G) |
|---|---|---|---|---|---|---|---|
| LI | 2.67 | 0.50 | 0.15 | 0.30 | 7.05 | 0.01 | 15.4 |

(A) E.P. Additive = 1-hydroxy-3,7-diphenyl-5-coco-5-aza-1-bora-2,8-dioxacyclooctane (Example IX).

(B) anti-oxidant = 4 octyldiphenyl amine.

(C) Copper Corrosion Inhibitor = a mixture of 83 weight percent 1,3,4-thiodiazole -2,5-bis (octyldisulfide) and 17 weight percent of 2 mercapto-5-octyldithio-1,3,4-thiodiazole.

(D) OLOA 267 = zinc dialkyl dithiophate marketed commercially by the Chevron Chemical Company.

(E) AMOCO PCO-059 = detergent/dispersant package marketed commercially by the Amoco Oil Company.

(F) UNAD 242 = Silicon type defoamant containing kerosene.

(G) BWL = bearing weight loss, e.g. a BWL of 40 mg or less is acceptable.

Example LII

The lubricant composition disclosed in Table 12 of Example LI is tested in a 1977 Oldsmobile V-8 engine for 64 hours in accordance with the following with 1977 General Motors Lubricant Evaluation Sequence III D test.

Prior to each test run, the engine is completely disassembled, solvent cleaned, measured and rebuilt in strict accordance to furnished specifications. Following the preparation, the engine is installed on a dynamometer test stand equipped with the appropriate accessories for controlling speed, load, temperatures and other various engine operating conditions.

The engine is operated on a 4-hour break-in-schedule after which oil is sampled and leveled. The engine is then operated under non-cyclic, moderately high speed, high load and temperature conditions for a test duration of 64 hours, with oil levels and additions each 8 hours.

Following is a summary of these operating conditions:

Table 13

| | |
|---|---|
| Speed, rpm | 3000 ± 20 |
| Load, bhp<br>(Kw) | 100 ± 2<br>(74.6 ± 1.49) |
| Oil, to engine, after filter, °F.<br>(°C.) | 300 ± 2<br>(149 ± 1.1) |
| Oil pump outlet, psig min<br>(atmospheres min) | 40<br>(3.72) |
| Coolant, jacket out, °F.<br>(°C.) | 245 ± 1<br>(18.3 ± 0.6) |
| jacket in, °F.<br>(°C.) | 235 ± 1<br>(112.8 ± 0.6) |
| jacket flow rate, gpm<br>(lpm) | 60 ± 1<br>(227 ± 3.8) |
| rocket cover out, °F.<br>(°C.) | 240 ± 3<br>(115.56 ± 1.67) |
| at gpm per cover<br>(lpm) | at 1.5 ± 0.5<br>(5.7 ± 1.9) |
| breather tube out, °F.<br>(°C.) | 100 ± 2<br>(37.8 ± 1.1) |
| at gpm<br>(lpm) | at 3.0 ± 0.5<br>(11.36 ± 1.9) |
| Air-fuel ratio | 16.5 ± 0.5 |
| Carburetor, air temperature ,°F.<br>(°C.) | 80 ± 2<br>(26.7 ± 1.1) |
| Carburetor, air humidity, grains per lb of dry air<br>(grains per gram of dry air) | 80 ± 5<br>(0.01143 ± 0.0007) |
| Carburetor, pressure, in. of water<br>(cm) | 0.1 to 0.3<br>(.3 to .8) |
| Blowby rate, cfm at 100°F. and 29.7 in.<br>(37.78° C.) and (75.4 cm) of Hg | 2.0 ± 0.3<br>(0.0566 ± 0.0085) |
| Intake manifold vacuum, in. of Hg<br>(cm) | 7 ± 2<br>(17.78 ± 5.08) |
| Exhaust back pressure, in. of water<br>(cm) | 30 ± 2<br>(76.2 ± 5.08) |
| Exhaust back pressure, max differential, in. (cm) of water | 0.2 (0.51) |

After every 8 hours of testing, a 25-minute shutdown period is provided for oil sampling, additions and level adjustments. The total running test time for Sequence IIID is 64 hours. The results are summarized in Table 14 below:

Table 14

| | Test | Result | API "SF" Limit |
|---|---|---|---|
| (A) | Engine Sludge Rating (10=clean) | 9.5 | 9.2 min. |
| (B) | Piston Varnish (10=clean) | 9.4 | 9.2 min. |
| (C) | Cam & Lifter Wear (ink) | 0.0019 | 0.0080 max. |
| (D) | 64 hour Viscosity increase, % | 182 | 375 max. |
| (E) | Oil Consumption, quarts | 3.06 | 6.38 max. |

The engine tests are performed in accordance with the Coordinating Research Council (CRC) rating and techniques located in CRC Manual NOS 9 and 12.

Example LIII

The sulfurized, boron-containing, heterocyclic compound 1-hydroxy-3,7-diphenyl-5-(9,10 epithiooleyl)-1-bora-2,8-dioxa-5-aza-cyclooctane is prepared by mixing 12 grams of oleylamine, 9.6 grams of styrene oxide and 200 ml of toluene for 30 minutes at room temperature (25° C.)in a single-necked on a liter round-bottomed flask. The flask is placed in a heating mantle and water-cooled condenser. The mixture is heated under reflux for three hours producing and oleyamine/styrene oxide adduct.

The adduct is cooled to room temperature and 2.47 grams of boric acid is added to the flask. Next, the resulting mixture is refluxed until 1.44 ml of water collects in the Dean-Stark trap. The flask and contents are moved to a rotary evaporator where toluene is stripped from the boron-containing, heterocyclic compound (18 grams).

Sulfur (0.96 grams) and 75 ml of toluene are added to the round-bottomed flask and the resulting mixture is heated to reflux temperature with mixing for four hours. The reaction produces 1-hydroxy-3,7-diphenyl-5-(9,10 epithiooleyl)-1-bora=2,8-dioxa-5-aza-cyclooctane.

Example LIV

The compound 1-hydroxy-3,7-diphenyl-5-(9,10 epithiooleyl)-1-bora-2,8-dioxa-5-aza-cyclooctane is tested for extreme pressure properties in 450 neutral oil in accordance with the procedure disclosed in ASTM:D 32 33-73 (Reapproved 1978) using a Falex lubricant tester. The test is performed by applying resistance to a revolving metal journal. A rachet mechanism movably attached to two V-blocks applies resistance by steadily increasing pressure on the journal. The metal journal and V-blocks (steel) are submerged in the lubricant composition to be tested. The results are summarized in Table 15 below:

Table 15

| True Load lbs. (Newtons) | Torque on Journal lb.-in. (Newtons-Meters) | |
|---|---|---|
| | 450 Neutral Oil without additive (A) | 450 Neutral Oil with additive (B) |
| 300 (1,334) | 9 (1.017) | 2 (0.226) |
| 500 (2,224) | 12 (1.356) | 4 (0.452) |
| 750 (3,336) | xx | 8 (0.904) |
| 1,000 (4,448) | | 13 (1.469) |
| 1,250 (5,560) | | 18 (2.034) |
| 1,500 (6,672) | | 23 (2.599) |
| 1,750 (7,784) | | xx |

(A) 450 Neutral Oil, marketed commercially by Union Oil Company of California.

(B) Additive = 1-hydroxy-3,7-diphenyl-5-(9,10 epithiooleyl)-1-bora-2,8-dioxa-5-aza-cyclooctane.

Example LV

A sulfochlorinated, boron-containing, heterocyclic compound is produced by adding 20 grams of 1-hydroxy-3,7-diphenyl-5-oleyl-5-aza-1-bora-2,8-dioxacyclooctane, 10 ml of toluene and 1.76 grams of sulfur monochloride to a one liter round-bottomed flask equipped with heating mantle and water-cooled condenser. The mixture thus formed is heated at 200° F. (93.33° C.) for 45 minutes, then 6.3 grams of 450 neutral oil is added to the flask. The compound 10,10'-dithiodi[9-chloro-1-(5-hydroxy-3,7-diphenyl-1-aza-4,6-diocta-5-bora-cyclooctyl)-octadecane] is produced in this reaction.

Example LVI

The compound dithiodi[1-(5-hydroxy-3,7-diphenyl-1-aza-4,6-diocta-5-bora-cyclooctyl)-chlorotallow] is produced in accordance with the procedure of Example LIII with the following exception:

200 grams of 1-hydroxy-3,7-diphenyl-5-tallow-5-aza-1-bora-2,8-dioxacyclooctane and 1.215 grams of sulfur monochloride are added to the one liter round-bottomed flask.

Example LVII to LIX

The compounds produced in Examples LV and LVI are tested for extreme pressure properties by admixing each compound with separate portions of 450 neutral oil at concentrations of 2 weight percent. A sample of 450 neutral oil with an additive (compound) serve as a control in the experiment.

Each lubricant composition is tested in accordance with the procedure disclosed in ASTM:D 32 33-73 (Reapproved 1978) using a Falex lubricant tester containing a steel journal and V-blocks. A summary of the results obtained disclosed in Table 16 below:

Table 16

TORQUE ON JOURNAL LB.-IN. (NEWTONS-METERS)

| Example<br>True Load<br>Lbs. (Newtons) | LVII<br>450 Neutral Oil | LVIII<br>450 Neutral Oil with 2 wt.% Additive of Ex. LV | LIX<br>450 Neutral Oil with 2 wt.% Additive of Ex. LVI |
|---|---|---|---|
| 300 (1,334) | 9 (1.017) | 2 (0.226) | 4 (0.452) |
| 500 (2,224) | 14 (1.587) | 3 (0.339) | 6 (0.678) |
| 750 (3,336) | 20 (2.260) | 8 (0.904) | 10 (1.130) |
| 1,000 (4,448) | xxx (1) | 9 (1.017) | 14 (1.695) |
| 1,250 (5,560) | | 11 (1.243) | 18 (2.034) |
| 1,500 (6,672) | | 13 (1.469) | 21 (2.373) |
| 1,750 (7,784) | | 13 (1.469) | 23 (2.599) |
| 2,000 (8,896) | | xxx | 24 (2.712) |
| 2,250 (10,008) | | | xxx |

(1) xxx indicates failure occurred with the journal scoring and the shear pin breaking.

Example LX

A chlorinated, boron-containing, heterocyclic compound is prepared by placing 71.3 grams of a mixture containing 75 weight percent of 1-hydroxy-3,7-diphenyl-5-tallow-5-aza-1-bora-2,8-dioxacyclooctane and 25 weight percent of 450 neutral oil into a 250 ml Pyrex flask equipped with a side arm. Chlorine gas is introduced into the flask through a Tygon tube attached to a glass tube equipped with a rubber stopper and extending to the bottom of the flask. The chlorine gas is bubbled through the heterocyclic compound with agitation. Excess gas is vented through the side arm of the flask, Tygon tubing and glass tubing into an aqueous solution of 10% potassium hydroxide. The chlorine gas was bubbled through the system for 15 minutes giving a total weight gain of 3.2 grams to the heterocyclic compound. The compound thus produced is 1-hydroxy-3,7-diphenyl-5-(dichlorotallow)-1-bora-2,8-dioxa-5-aza-cyclooctane.

Example LXI

A brominated, boron-containing, heterocyclic compound is prepared by placing 71.33 grams of a mixture containing 75 weight percent of 1-hydroxy-3,7-diphenyl-5-tallow-5-aza-1-bora-2,8-dioxacyclooctane and 25 weight percent of 450 neutral oil into a 250 ml Pyrex flask equipped with a heating mantle and thermometer.

Liquid bromine (6.37 grams) is added to the Pyrex flask and the mixture is agitated for ten minutes. Next the mixture is heated at 120° F. (49° C.) for ten minutes. The compound 1-hydroxy-3,7-diphenyl-5-(dibromotallow)-1-bora-2,8-dioxa-5-aza-cyclooctane is produced.

Examples LXII to LXVI

The compounds produced in Examples LX and LXI are tested for extreme pressure properties by admixing each compound with separate portions of SAE 30 motor oil containing 0.05 weight percent phosphorus and the concentration of additive indicated in Table 17 below. A sample of SAE 30 motor oil without an additive (compound) serves as a control in the experiment.

Each lubricant composition is tested in accordance with the procedure disclosed in ASTM:D 32 33-73 (Reapproved 1978) using a Falex lubricant tester containing a steel journal and V-blocks. A summary of results obtained disclosed in Table 17 below:

Table 17

TORQUE ON JOURNAL LB.-IN. (NEWTONS-METERS)

| Example | LXII | LXIII | LXIV | LXV | LXVI |
|---|---|---|---|---|---|
| True Load lbs. (Newtons) | (SAE 30 Oil) | Oil with Additive of Ex. LXI (1 wt.%) | Oil with Additive of Ex. LX (1 wt%) | Oil with Additive of Ex. LX (2 wt.%) | Oil with Additive of Ex. LX (5 wt.%) |
| 300 (1,334) | 13 (1.469) | 9 (1.017) | 9 (1.017) | 8 (0.904) | 6 (0.678) |
| 500 (2,224) | 16 (1.808) | 15 (1.695) | 13 (1.469) | 11 (1.243) | 8 (0.904) |
| 750 (3,336) | 30 (3.389) | 22 (2.486) | 20 (2.260) | 20 (2.260) | 12 (1.356) |
| 755 (3,358) | Shear | ----- | ----- | ----- | ----- |
| 950 (4,226) | ----- | Shear | ----- | ----- | ----- |
| 1,000 (4,448) | ----- | ----- | 25 (2.825) | 24 (2.712) | 16 (1.808) |
| 1,100 (4,893) | ----- | ----- | Shear | ----- | ----- |
| 1,250 (5,560) | ----- | ----- | ----- | 30 (3.389) | 19 (2.147) |
| 1,300 (5,782) | ----- | ----- | ----- | Shear | ----- |
| 1,450 (6,450) | ----- | ----- | ----- | ----- | Shear |

The above data indicate that the boron-containing heterocyclic compounds described above impart extreme to SAE 30 motor oil at the indicated concentrations.

(As a final point, it should be noted that in the formulas hereinbefore that, when the R groups designated as $R_1$, $R_2$, $R_{22}$, $R_{23}$, $R_{30}$, $R_{31}$, $R_{32}$, $R_{33}$, $R_{38}$, $R_{39}$, $R_{40}$, $R_{41}$, $R_{44}$, and $R_{45}$ are arylalkyl groups or alkaryl groups, it is most highly preferred that there be a chain of carbon atoms bridging the oxygen and nitrogen atoms, with none of said bridging carbon atoms being a member of an aryl ring. Even more preferred is that an aryl, alkaryl, or arylalkyl group be bonded to the bridging carbon atom connected directly to the oxygen atom. Still more preferred is that there be only two carbon atoms in the bridge between the oxygen and nitrogen atoms, with an aryl group, such as phenyl, bonded to the carbon atom of the bridge which is connected to the oxygen atom.)

## Industrial Applicability

The heterocyclic, boron-containing compounds of the present invention are suitable as additives in any of a great number of lubricants, but most particularly in automobile and diesel lubrication oils. The additives impart beneficial extreme pressure, anti-wear and friction-reducing properties to the lubricant, and thus enhance its usefulness in automobile engines, diesel engines, and the like.

Obviously, many modifications and variations of this invention, as hereinbefore set forth may be made without departing from the spirit and scope thereof, and therefor only such limitations should be imposed as are indicated in the appended claims.

Additional Inventive Concepts

A composition comprising a major proportion of a lubricating oil and a minor proportion of a compound having the formula:

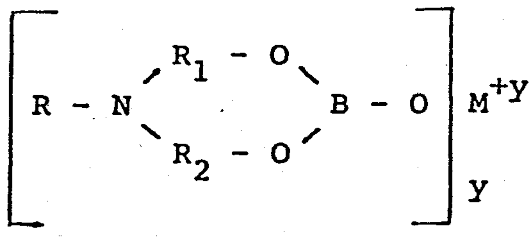

where R is an inorganic radical or an organic radical other than an alkanol group and $R_1$ and $R_2$ are the same or different organic radicals of at least 3 carbon atoms, provided $R_1$ and $R_2$ are not both amino groups and further provided, if $R_1$ and $R_2$ are both aromatic groups, that at least one of $R_1$ and $R_2$ contains no carbon atoms or between 3 and 5 carbon atoms of the same aromatic ring in the chain of atoms bridging the oxygen and nitrogen atoms, M is an inorganic radical or an organic radical selected from unsubstituted alkyl, aryl, alkenyl, alkynyl, alkaryl, arylalkyl radicals of 1 to 50 carbon atoms, and y is an integer from 1 to 4.

A composition comprising a major proportion of a lubricating oil and a minor proportion of a compound having the formula:

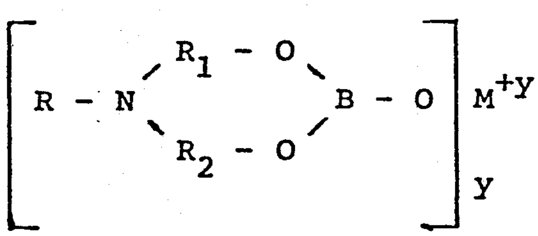

where R is an inorganic or organic radical and $R_1$ and $R_2$ are the same or different organic radicals of at least 4 carbon atoms, provided $R_1$ and $R_2$ are not both amino groups and further provided, if $R_1$ and $R_2$ are both aromatic groups, that at least one of $R_1$ and $R_2$ contains no carbon

atoms or between 3 and 5 carbon atoms of the same aromatic ring in the chain of atoms bridging the oxygen and nitrogen atoms, M is an inorganic radical or an organic radical selected from unsubstituted alkyl, aryl, alkenyl, alkynyl, alkaryl, and arylalkyl radicals of 1 to 50 carbon atoms, and y is an integer from 1 to 4.

A composition defined in claim 1 or 2 wherein R is of at least 9 carbon atoms if aliphatic and at least 7 carbon atoms if aromatic.

A composition as defined in claim 1 or 2 wherein $R_1$ and $R_2$ are the same or different hydrocarbyl or hydrocarbyloxy radicals.

A composition as defined in claim 1 or 2 wherein M is hydrogen or a metal selected from the group consisting of the transition metals of atomic number between 21 and 30 and the Group IVA metals.

A composition as defined in claim 1 or 2 wherein R is an alkenyl group.

A composition as defined in claim 1 or 2 wherein $R_1$ and $R_2$ are the same or different substituted or unsubstituted hydrocarbyl or hydrocarbyloxy groups.

A composition as defined in claim 1 or 2 wherein neither $R_1$ nor $R_2$ is an amino group, a hydrocarbylamino group, or a hydroxyhydrocarbyl group.

A composition as defined in claim 1 or 2 wherein M is an unsubstituted methyl or cyclohexyl group.

A compound of formula:

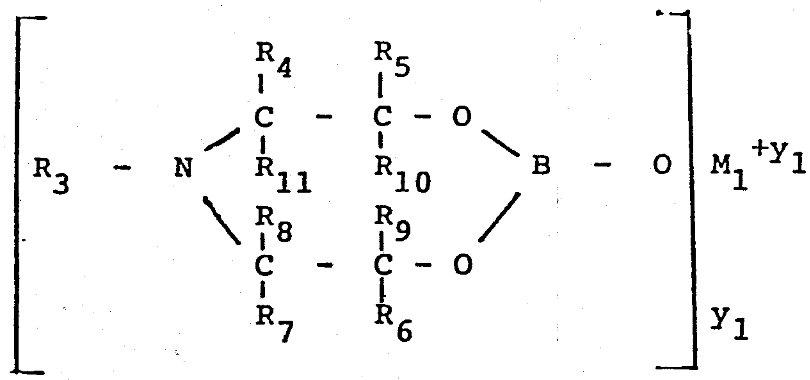

wherein $R_3$ is hydrogen or an organic radical having from about 1 to about 30 carbon atoms, $R_4$, $R_5$, $R_6$, and $R_7$ are the same or different and are either hydrogen or an organic radical, with at least one of $R_4$, $R_5$, $R_6$, and $R_7$ being an aryl, alkaryl or arylalkyl radical, $R_8$, $R_9$, $R_{10}$, and $R_{11}$ are the same or different radicals selected from hydrogen and organic radicals, $y_1$ is an integer from 1 to 4, and $M_1$ is an inorganic or organic radical.

A compound as defined in claim 10 wherein both $R_5$ and $R_6$ are aromatic radicals.

A compound as defined in claim 10 wherein both $R_5$ and $R_6$ are both phenyl.

A compound as defined in claim 12 wherein $R_4$, $R_7$, $R_8$, $R_9$, $R_{10}$, and $R_{11}$ are all hydrogen.

A compound as defined in claim 13 wherein $M_1$ is either hydrogen or a metal selected from the group consisting of the Group IVA metals and the transition metals of atomic number from 21 to 30.

A compound having the formula:

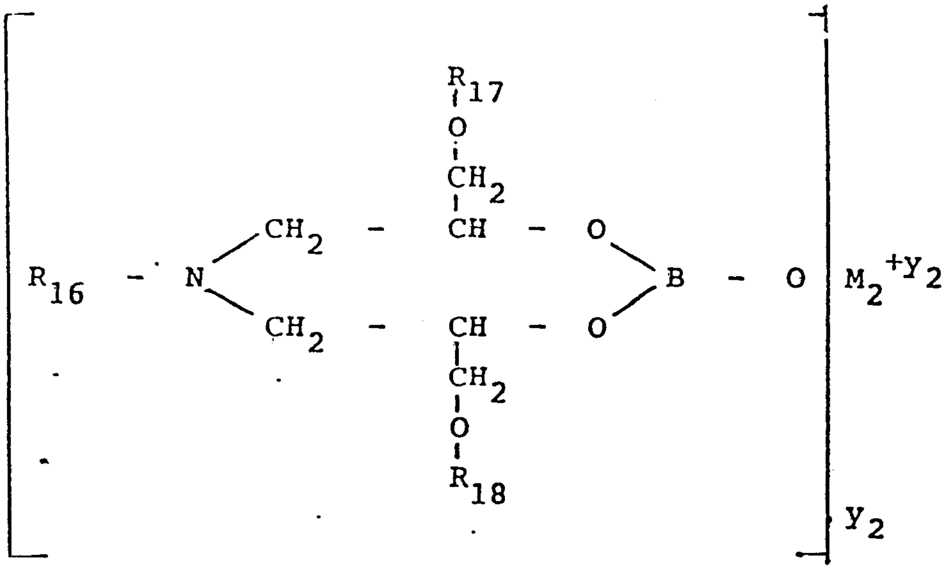

where $R_{16}$ is hydrogen or an organic radical having from 1 to 50 carbon atoms, $R_{17}$ and $R_{18}$ are the same or different organic radicals of between 1 and 50 carbon atoms, $y_2$ is an integer from 1 to 4, and $M_2$ is an organic or inorganic radical.

A compound as defined in claim 15 wherein $M_2$ is hydrogen or a metal selected from the group consisting of the Group IVA metals and the transition metals having an atomic number from 21 to 30.

A compound as defined in claim 15 wherein $R_{16}$ is selected from hydrogen or a substituted or unsubstituted alkyl, alkenyl, alkynyl, aryl, alkaryl, or arylalkyl radical having from 1 to about 24 carbon atoms, and $R_{17}$ and $R_{18}$ are the same or different radicals selected from the substituted or unsubstituted alkyl, aryl, alkaryl, and arylalkyl radicals having from 1 to 10 carbon atoms.

A compound as defined in claim 15 wherein $M_2$ is an organic radical selected from substituted or unsubstituted alkyl, aryl, alkaryl, arylalkyl, alkynyl, or alkenyl radicals having from 1 to 50 carbon atoms.

A compound of formula:

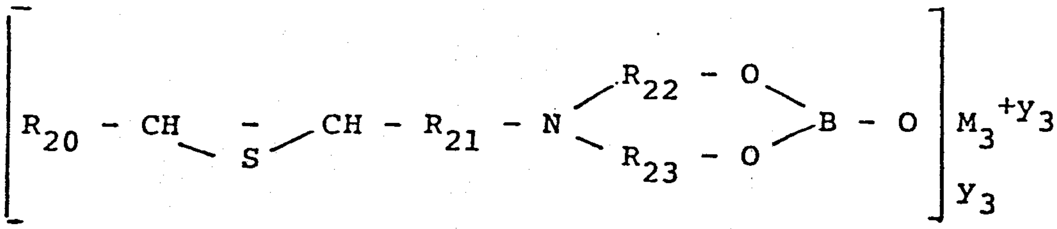

wherein $R_{21}$, $R_{22}$, and $R_{23}$ are the same or different organic radicals having from 1 to 50 carbon atoms, $R_{20}$ is an inorganic radical, or an organic radical containing 1 to 50 carbon atoms, $M_3$ is an inorganic or organic radicals and $y_3$ is an integer from 1 to 4.

A compound as defined in claim 19 wherein $R_{20}$ and $R_{21}$ are the same or different unsubstituted alkyl radicals having from 1 to about 20 carbon atoms, and $R_{22}$ and $R_{23}$ are the same or different unsubstituted alkaryl or arylalkyl groups having from about 8 to about 30 carbon atoms.

A compound as defined in claim 19 wherein $R_{20}$, $R_{21}$, $R_{22}$, and $R_{23}$ are unsubstituted hydrocarbyl radicals.

A compound as defined in claim 19, 20, or 21 wherein M is hydrogen or a metal selected from the group consisting of Group IVA metals and the transition metals having an atomic number from 21 to 30.

A compound having the formula:

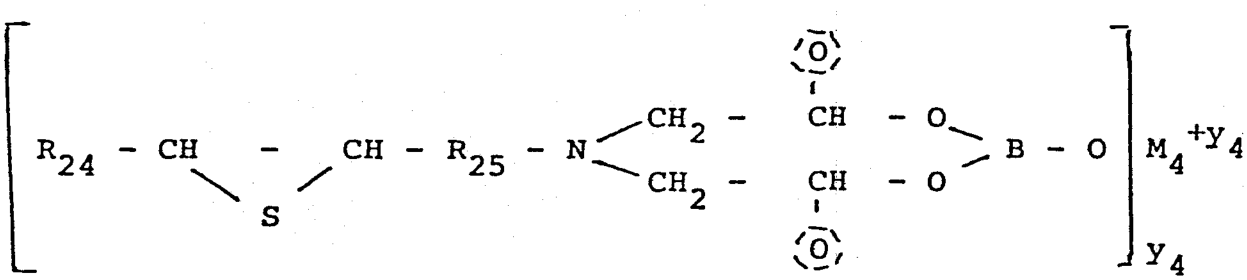

wherein $R_{24}$ and $R_{25}$ are the same or different organic radicals having from 1 to 30 carbon atoms, $M_4$ is an organic or inorganic radical, and $y_4$ is an integer from 1 to 4.

A compound as defined in claim 23 wherein $R_{24}$ and $R_{25}$ are the same or different alkyl, aryl, alkaryl, or arylalkyl radicals having from 1 to 30 carbon atoms.

A compound as defined in claim 23 wherein $R_{24}$ and $R_{25}$ are the same or different unsubstituted alkyl radicals having from about 1 to 20 carbon atoms.

A compound as defined in claim 23, 24, or 25 wherein $M_4$ is hydrogen.

A compound as defined in claim 23, 24, or 25 wherein $M_4$ is a metal selected from the Group IVA metals and the transition metals having an atomic number from 21 to 30.

A compound as defined in claim 23, 24, or 25 wherein $M_4$ is selected from unsubstituted alkyl, aryl, alkaryl, arylalkyl, alkynyl, and alkenyl groups having from 1 to 50 carbon atoms.

A compound having the formula:

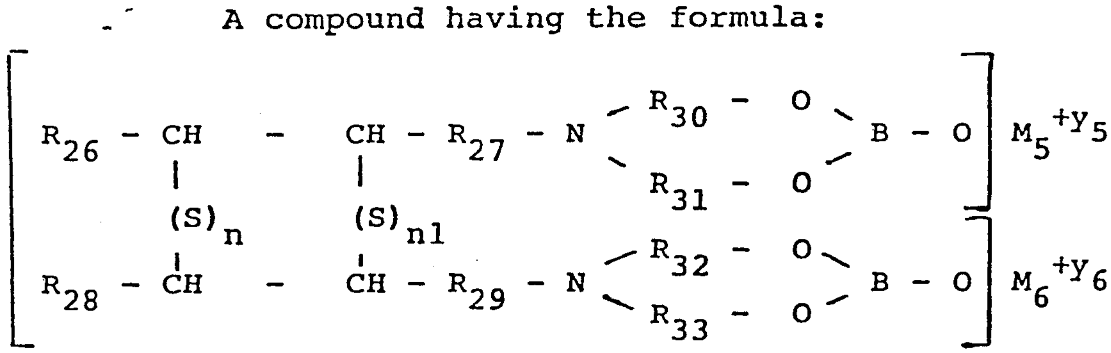

wherein $R_{26}$ and $R_{28}$ are inorganic or organic radicals, and $R_{27}$, $R_{29}$, $R_{30}$, $R_{31}$, $R_{32}$, $R_{33}$ are the same or different organic radicals having from 1 to 50 carbon atoms, n and $n_1$

are the same or different integers from 1 to 4, and $M_5$ and $M_6$ are independently selected from inorganic or organic radicals, and $y_5$ and $y_6$ are the same or different integers from 1 to 4.

A compound as defined in claim 29 wherein $R_{26}$, $R_{27}$, $R_{28}$, and $R_{29}$ are the same or different alkyl radicals having from 1 to about 20 carbon atoms, and $R_{30}$, $R_{31}$, $R_{32}$, and $R_{33}$ are the same or different alkyl, aryl, alkaryl, or arylalkyl groups having from about 1 to about 30 carbon atoms.

A compound as defined in claim 30 wherein $R_{30}$, $R_{31}$, $R_{32}$, and $R_{33}$ are the same or different alkaryl or arylalkyl groups.

A compound having the formula:

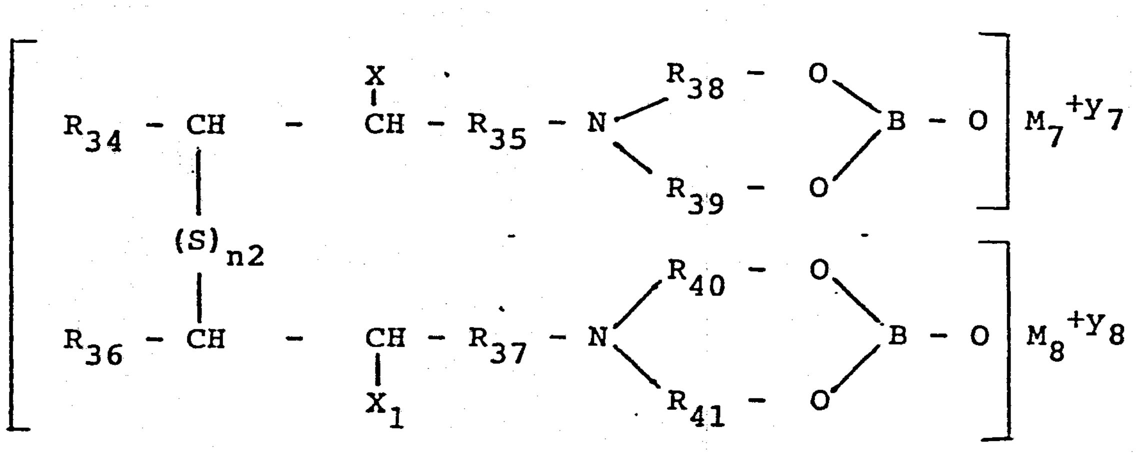

wherein $R_{34}$ and $R_{36}$ are the same or different inorganic or organic radicals and $R_{35}$, $R_{37}$, $R_{38}$, $R_{39}$, $R_{40}$, and $R_{41}$ are the same or different organic radicals, X and $X_1$ are halogens, $y_7$ and $y_8$ are the same or different integers from 1 to 4, $M_7$ and $M_8$ are the same or different inorganic or organic radicals, and $n_2$ is an integer from 1 to 4.

A compound as defined in claim 32 wherein $R_{38}$, $R_{39}$, $R_{40}$, and $R_{41}$ are alkaryl or arylalkyl groups having from 1 to 30 carbon atoms.

A compound as defined in claim 32 or 33 wherein X and $X_1$ are chlorine.

A compound as defined in claim 32 or 33 wherein $M_7$ and $M_8$ are independently selected from hydrogen, the Group IVA metals, and the transition metals having an atomic number from 21 to 30.

A compound as defined in claim 34 wherein $M_7$ and $M_8$ are hydrogen.

A compound having the formula:

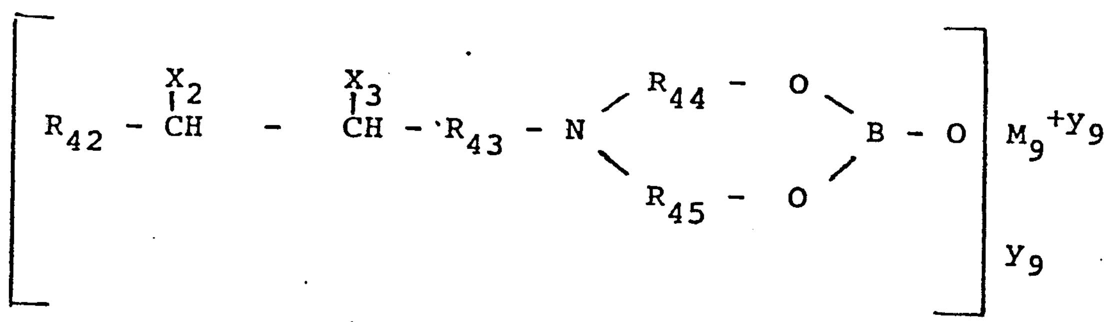

wherein $R_{42}$ is an organic or inorganic radical, $R_{43}$, $R_{44}$, and $R_{45}$ are the same or different organic radicals, $X_2$ and $X_3$ are the same or different halogens, $y_9$ is an integer from 1 to 4, and $M_9$ is an organic or inorganic radical.

A compound as defined in claim 37 wherein $X_2$ and $X_3$ are both chlorine, and $R_{44}$ and $R_{45}$ are alkaryl or arylalkyl groups, and $R_{42}$ is a hydrocarbyl group.

The compound produced by (1) contacting a primary amine with an aromatic oxide of formula:

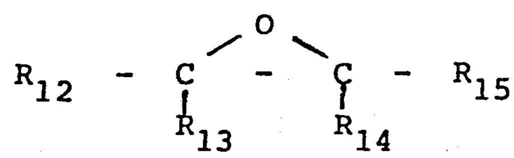

wherein at least one of $R_{12}$, $R_{13}$, $R_{14}$, or $R_{15}$ is aryl, alkaryl, or arylalkyl with the remaining R groups being independently hydrogen or an organic radical having 1 to 30 carbon atoms; and (2) contacting the product of step (1) with boric acid.

The compound produced by (1) contacting a primary amine or ammonia with a glycidyl ether of formula:

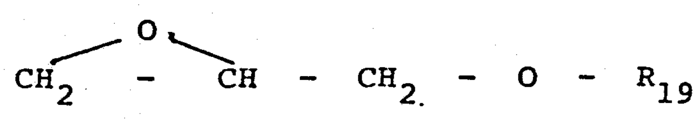

wherein $R_{19}$ is alkyl, aryl, alkaryl, or arylalkyl having from 1 to 50 carbon atoms; and (2) contacting the product of step (1) with boric acid.

The compound produced by (1) contacting an aromatic or aliphatic epoxide with an unsaturated primary amine; (2) contacting the resultant product with boric acid; and (3) contacting the product of step (2) with elemental sulfur to impart one or more sulfur atoms to the resultant product compound.

The compound of claim 41 wherein stoichiometric sulfur is used to impart only one sulfur atom to the resultant product compound.

The compound of claim 41 wherein sulfur is added in greater than the stoichiometric amount so that more than one sulfur atom is imparted to the resultant product compound.

The compound produced by (1) contacting an aromatic or aliphatic epoxide with an unsaturated primary amine; (2) contacting the resultant product with boric acid; and (3) contacting the product of step (2) with a sulfur halide to yield a product compound containing both sulfur and halogen atoms.

The compound produced by (1) contacting an aromatic or aliphatic epoxide with an unsaturated primary amine; (2) contacting the resultant product with boric acid; and (3) contacting the product of step (2) with a halogen or halide to yield a product compound containing halogen atoms.

A lubricating composition comprising a major amount of a lubricating oil and a minor amount of the compound defined in claim 10, 15, 19, 23, 29, 32, 37, 39, 40, 41, 42, 43, 44, or 45.

A lubricating oil composition as defined in claim 46 further containing an anti-oxidant.

A lubricating composition as defined in claim 47 wherein the anti-oxidant has the formula:

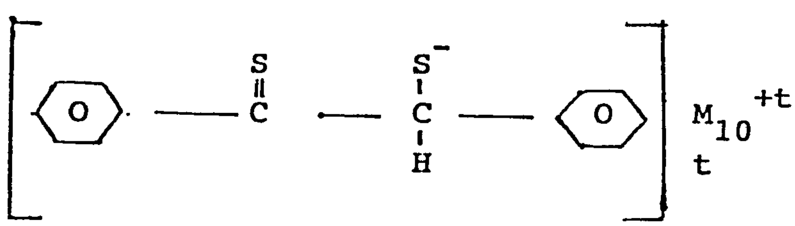

wherein $M_{10}$ is a first row transition metal and t is an integer from 1 to 4.

A lubricating composition as defined in claim 47 wherein the anti-oxidant has the formula:

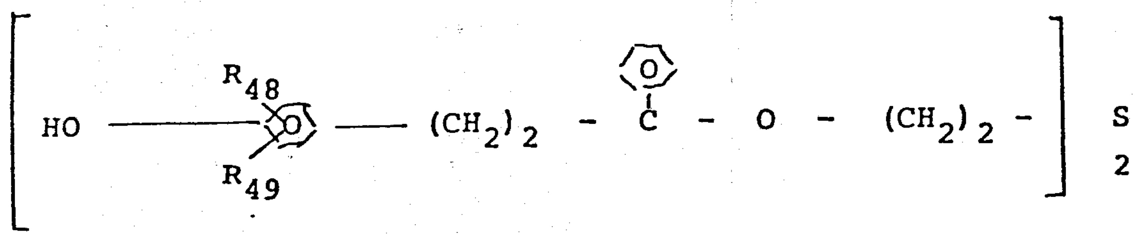

wherein $R_{48}$ and $R_{49}$ are selected from the same or different alkyl groups having from 1 to 6 carbon atoms.

A lubricating composition as defined in claim 47 wherein the anti-oxidant has the formula:

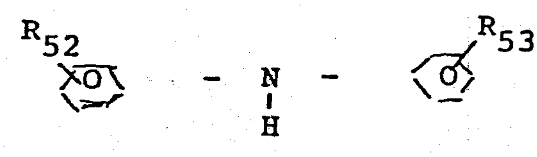

wherein $R_{52}$ and $R_{53}$ are hydrogen or the same or different alkyl radicals having from 1 to about 30 carbon atoms.

A lubricating composition as defined in claim 50 wherein $R_{52}$ and $R_{53}$ are alkyl groups having from 1 to 30 carbon atoms.

A lubricating composition as defined in claim 46 further containing one or more corrosion inhibitors.

A lubricating composition as defined in claim 52 wherein the corrosion inhibitor has the formula:

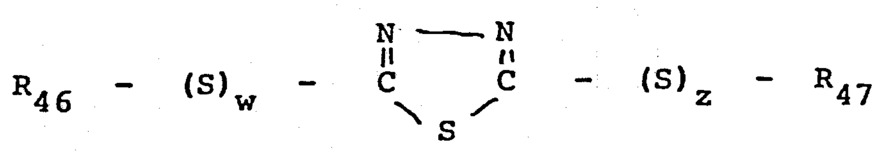

wherein $R_{42}$ and $R_{47}$ are the same or different radicals selected from hydrogen, straight or branched chain alkyl

groups, cyclic or alicyclic alkyl groups, aryl, alkaryl, and arylalkyl radicals having from 2 to about 30 carbon atoms, and w and z are integers from 1 to 8.

A lubricating composition as defined in claim 52 wherein the corrosion inhibitor is terephthalic acid.

A lubricating composition as defined in claim 47 further containing one or more corrosion inhibitors.

A lubricating composition as defined in claim 55 wherein the corrosion inhibitor has the formula:

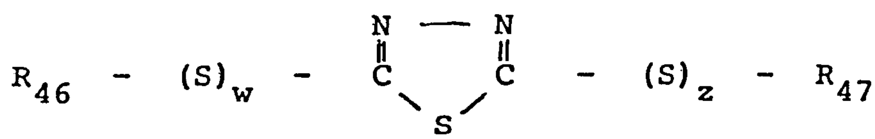

wherein $R_{46}$ and $R_{47}$ are the same or different radicals selected from hydrogen, straight or branched chain alkyl groups, cyclic or alicyclic alkyl groups, aryl, alkaryl, and arylalkyl radicals having from 2 to about 30 carbon atoms, and w and z are integers from 1 to 8.

A lubricating composition composition as defined in claim 55 wherein the corrosion inhibitor is terephthalic acid.

A lubricating composition as defined in claim 46 further containing one or more corrosion inhibitors selected from the group consisting of

terephthalic acid and a compound of formula:

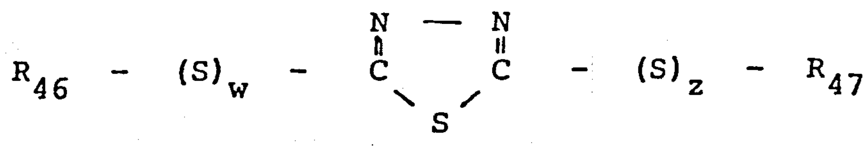

wherein $R_{46}$ and $R_{47}$ are the same or different radicals selected from hydrogen, straight or branched chain alkyl, cyclic or alicyclic alkyl, aryl, alkaryl, or arylalkyl radicals having from 2 to 30 carbon atoms, and w and z are integers from 1 to 8, said composition further containing one or more anti-oxidants selected from the group consisting of:

(I) a compound of formula:

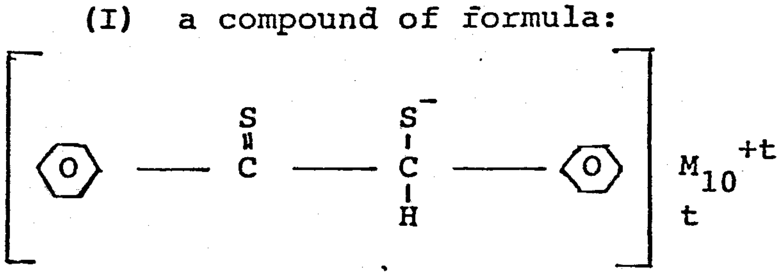

where $M_{10}$ is a first row transition metal and t is an integer from 1 to 4,

(II) a compound of formula:

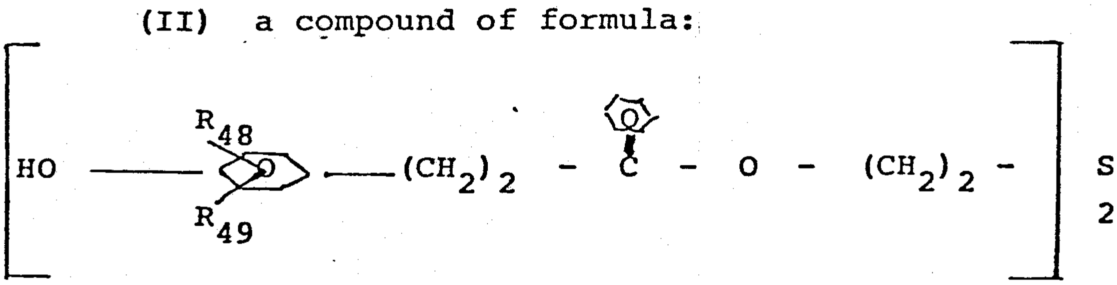

and (III) a compound of formula:

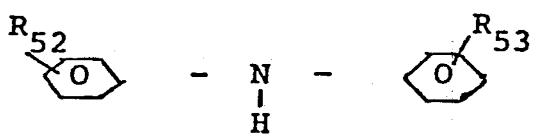

A lubricating composition comprising a major amount of a lubricating oil and a minor amount of a heterocyclic boron-containing compound of formula:

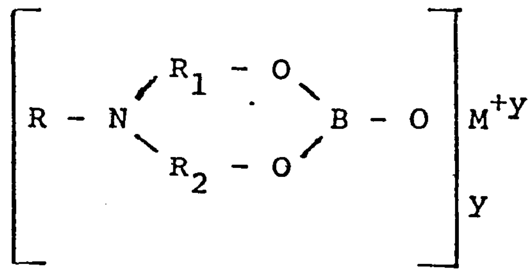

wherein $R_1$ is organic or inorganic, $R_1$ and $R_2$ are organic, y is an integer from 1 to 4, and M is inorganic or organic, plus at least one additive selected from the group consisting of:

(I) terephthalic acid;

(II) a compound of formula:

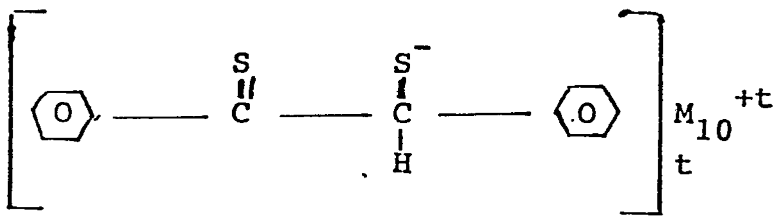

wherein $M_{10}$ is a first row transition metal and t is an integer from 1 to 4;

(III) a compound of formula:

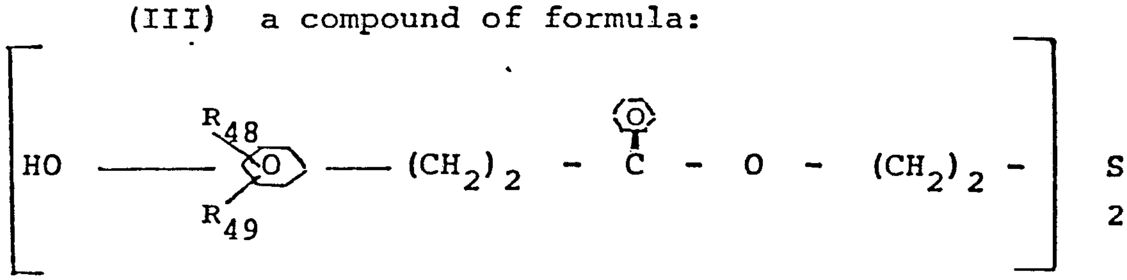

wherein $R_{48}$ and $R_{49}$ are selected from the same or different alkyl groups having from 1 to 6 carbon atoms;

(IV) a compound of formula:

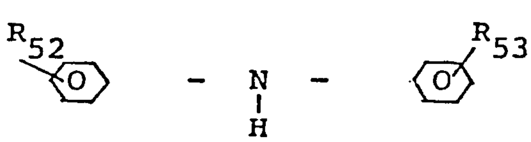

wherein $R_{52}$ and $R_{53}$ are hydrogen or the same or different alkyl radicals having from 1 to about 30 carbon atoms; and

0 241 949

(V) a compound of formula:

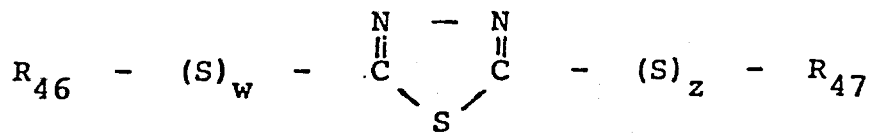

wherein $R_{46}$ and $R_{47}$ are the same or different radicals selected from hydrogen, straight or branched chain alkyl groups, cyclic or alicyclic alkyl groups, aryl, alkaryl, and arylalkyl groups having from 2 to about 30 carbon atoms, and w and z are integers from 1 to 8.

A lubricating composition comprising a major amount of a lubricating oil and a minor amount of a compound produced by (1) contacting a primary amine with an organic epoxide and (2) contacting the product of step (1) with boric acid, said composition further containing at least one of:

(I) terephthalic acid;

(II) a compound of formula:

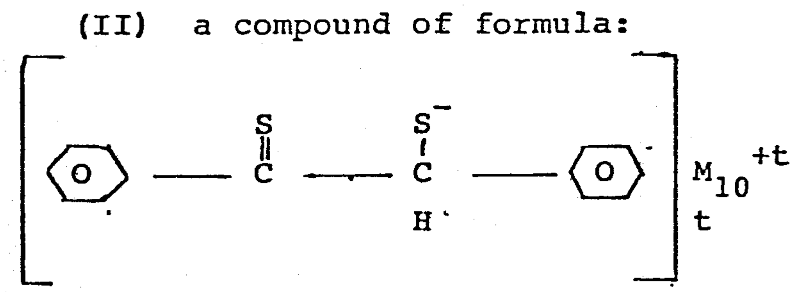

wherein $M_{10}$ is a first row transition metal and t is an integer from 1 to 4;

(III) a compound of formula:

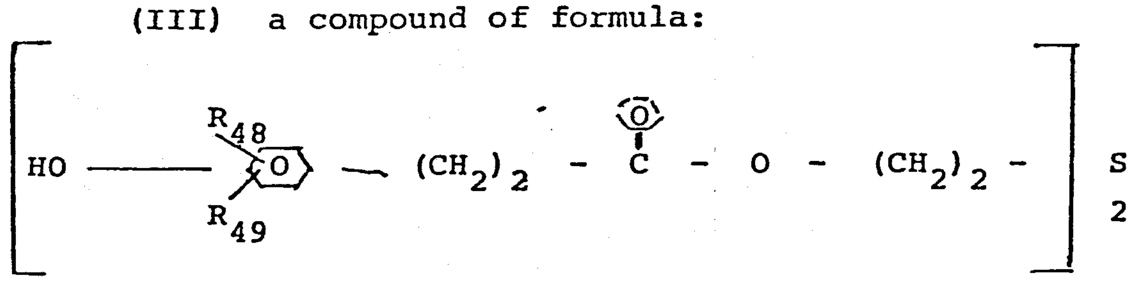

wherein $R_{48}$ and $R_{49}$ are selected from the same or different alkyl groups having from 1 to 6 carbon atoms;

1. A compound of the formula:

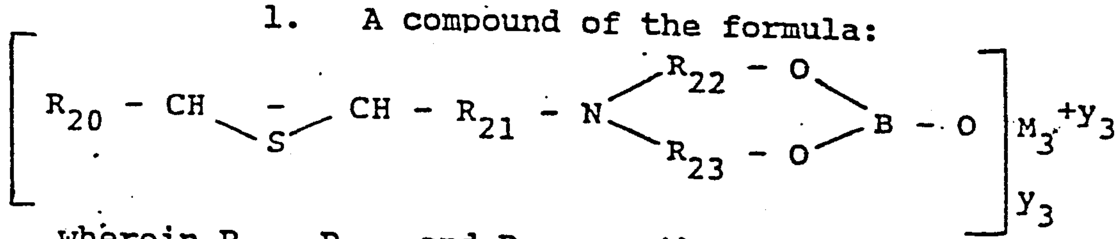

wherein $R_{21}$, $R_{22}$, and $R_{23}$ are the same or different organic radicals having from 1 to 50 carbon atoms, $R_{20}$ is an inorganic radical, or an organic radical containing 1 to 50 carbon atoms, $M_3$ is an inorganic or organic radical and $y_3$ is an integer from 1 to 4.

2. A compound as defined in claim 1 wherein $R_{20}$ and $R_{21}$ are the same or different unsubstituted alkyl radicals having from 1 to about 20 carbon atoms, and $R_{22}$ and $R_{23}$ are the same or different unsubstituted alkaryl or arylalkyl groups having from about 8 to about 30 carbon atoms.

3. A compound as defined in claim 1 wherein $R_{20}$, $R_{21}$, $R_{22}$, and $R_{23}$ are unsubstituted hydrocarbyl radicals.

4. A compound as defined in claim 1, 2, or 3 wherein M is hydrogen or a metal selected from the group consisting a Group IVA metals and the transition metals having an atomic number from 21 to 30.

5. A compound having the formula:

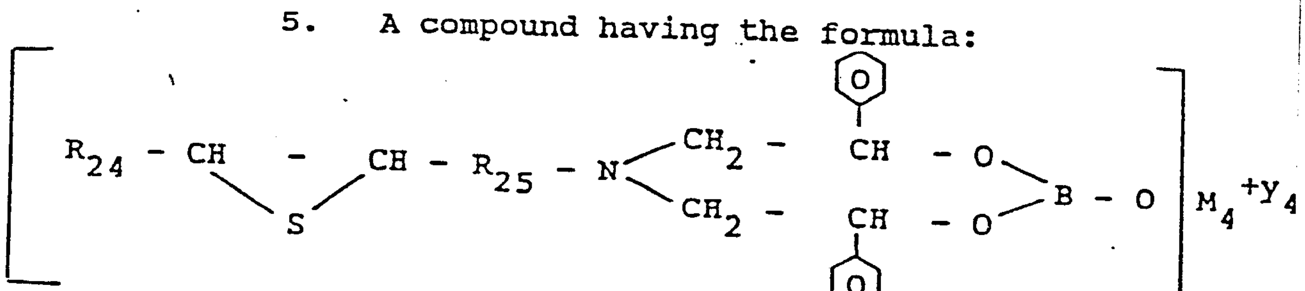

wnerein $R_{24}$ and $R_{25}$ are the same or different organic radicals having from 1 to 30 carbon atoms, $M_4$ is an organic or inorganic radical, and $y_4$ is an integer from 1 to 4.

(IV) a compound of formula:

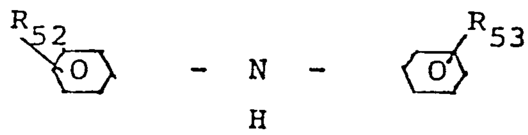

wherein $R_{52}$ and $R_{53}$ are hydrogen or the same or different alkyl radicals having from 1 to about 30 carbon atoms; and

(V) a compound of formula:

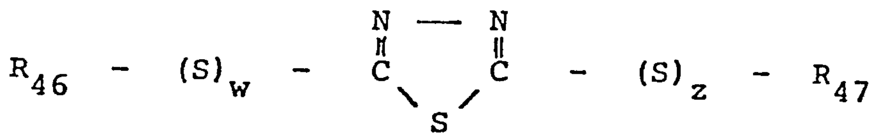

wherein $R_{46}$ and $R_{47}$ are the same or different radicals selected from hydrogen, straight or branched chain alkyl groups, cyclic or alicyclic alkyl groups, aryl, alkaryl, and arylalkyl groups having from 2 to about 30 carbon atoms, and w and z are integers from 1 to 8.

6. A compound as defined in claim 5 wherein $R_{24}$ and $R_{25}$ are the same or different alkyl, aryl, alkaryl, or arylalkyl radicals having from 1 to 30 carbon atoms.

7. A compound as defined in claim 5 wherein $R_{24}$ and $R_{25}$ are the same or different unsubstituted alkyl radicals h aving from about 1 to 20 carbon atoms.

8. A compound as defined in claim 5, 6, or 7 wherein $M_4$ is hydrogen.

9. A compound as defined in claim 5, 6, or 7 wherein $M_4$ is a metal selected from the Group IVA metals and the transition metals having an atomic number from 21 to 30.

10. A compound as defined in claim 5, 6, or 7 wherein $M_4$ is selected from unsubstituted alkyl, aryl, alkaryl, arylalkyl, alkynyl, and alkenyl groups having from 1 to 50 carbon atoms.

11. A compound having the formula:

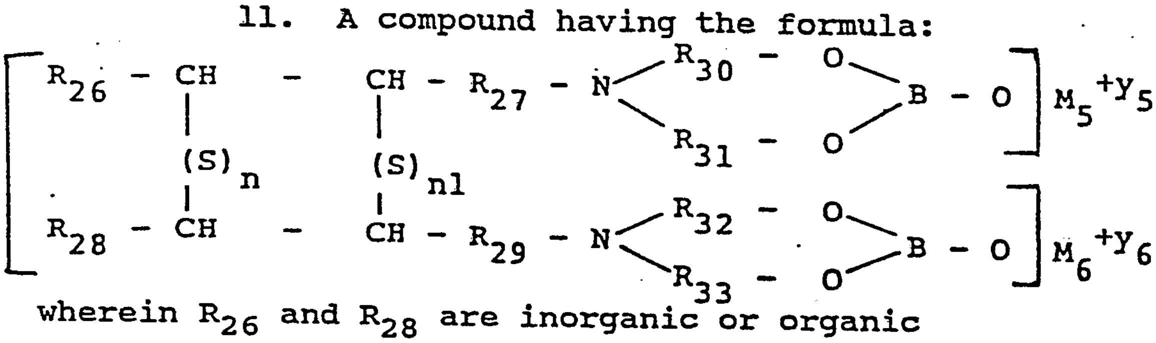

wherein $R_{26}$ and $R_{28}$ are inorganic or organic radicals, and $R_{27}$, $R_{29}$, $R_{30}$, $R_{31}$, $R_{32}$, $R_{33}$ are the same or different organic radicals having from 1 to 50 carbon atoms, n and $n_1$ are the same or different integers from 1 to 4, and $M_5$ and $M_6$ are independently selected from inorganic or organic radicals, and $y_5$ and $y_6$ are the same or different integers from 1 to 4.

12. A compound as defined in claim 11 wherein $R_{26}$, $R_{27}$, $R_{28}$, and $R_{29}$ are the same or different alkyl radicals having from 1 to about 20 carbon atoms, and $R_{30}$, $R_{31}$, $R_{32}$, and $R_{33}$ are the same or different alkyl, aryl, alkaryl, or arylalkyl groups having from about 1 to about 30 carbon atoms.

13. A compound as defined in claim 12 wherein $R_{30}$, $R_{31}$, $R_{32}$, and $R_{33}$ are the same or different alkaryl or arylalkyl groups.

14. A process for producing lubricating compositions, comprising reacting sulfur with a boron-containing compound of formula:

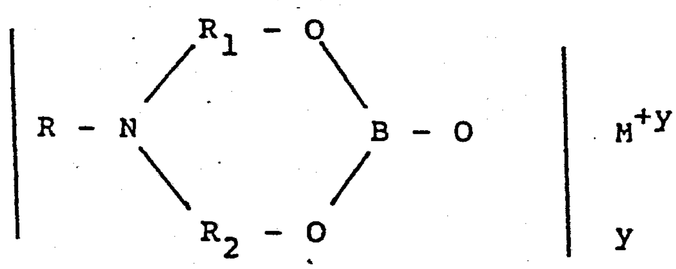

where R is an unsaturated organic radical, $R_1$ and $R_2$ are the same or different organic radicals having from 1 to 50 carbon atoms, y is an integer from 1 to 4, and M is organic or inorganic, and adding the resultant compound in a minor proportion to a lubricating oil.

15. The process as defined in claim 14 wherein said boron-containing compound has the formula:

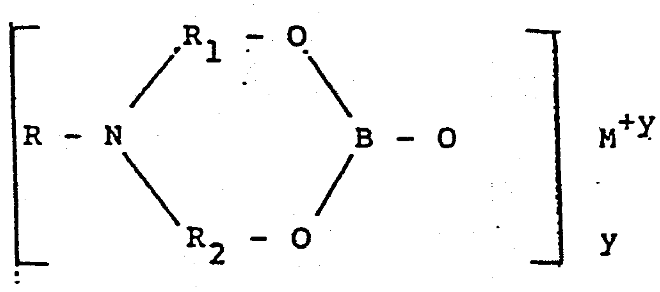

where R is an inorganic radical or an orgnaic radical other than an alkanol group and $R_1$ and $R_2$ are the same or different organic radicals of at least 3 carbon atoms, provided $R_1$ and $R_2$ are not both amino groups and further provided, if $R_1$ and $R_2$ are both aromatic groups, that at least one of $R_1$ and $R_2$ contains no carbon atoms or between 3 and 5 carbon atoms of the same aromatic ring in the chain of atoms bridging the oxygen and nitrogen atoms, M is an inorganic radical or an organic radical selected from unsubstituted alkyl, aryl, aldenyl, alkynyl, alkaryl, arylalkyl radicals of 1 to 50 carbon atoms, and y is an integer from 1 to 4.

16. The process as defined in claim 14 wherein said boron-containing compound has the formula:

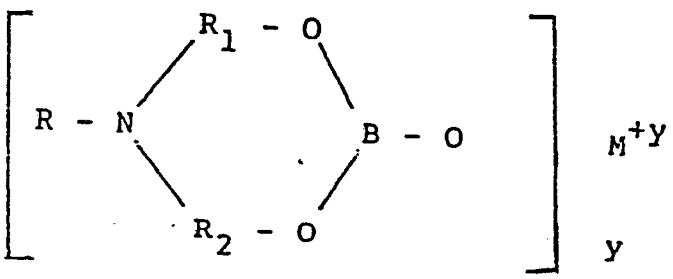

where R is an inorganic or organic radical and $R_1$ and $R_2$ are the same or different organic radicals of at least 4 carbon atoms, provided $R_1$ and $R_2$ are not both amino groups and further provided, if $R_1$ and $R_2$ are both aromatic groups, that at least one of $R_1$ and $R_2$ contains no carbon atoms or between 3 and 5 carbon atoms of the same aromatic ring in the chain of atoms bridging the oxygen and nitrogen atoms, M is an inorganic radical or an organic radical selected from unsubstituted alkyl, aryl, alkenyl, alkynyl, alkaryl, and arylalkyl radicals of 1 to 50 carbon atoms, and y is an integer from 1 to 4.

17. The process as defined in claim 14, 15, or 16 wherein R is aliphatic.

18. The process as defined in claim 14, 15, 16, or 17 wherein R is of least 9 carbon atoms.

19. The process as defined in claim 14, 15, 16, or 17 wherein R is an alkenyl group.

20. The process as defined in claim 14, 15, 16, 17, 18, or 19 wherein neither $R_1$ nor $R_2$ is an amino group, a hydrocarbylamino group, or a hydroxyhydrocarbyl group.

21. The process for producing a lubricating composition comprising reacting sulfur with a boron-containing compound of formula:

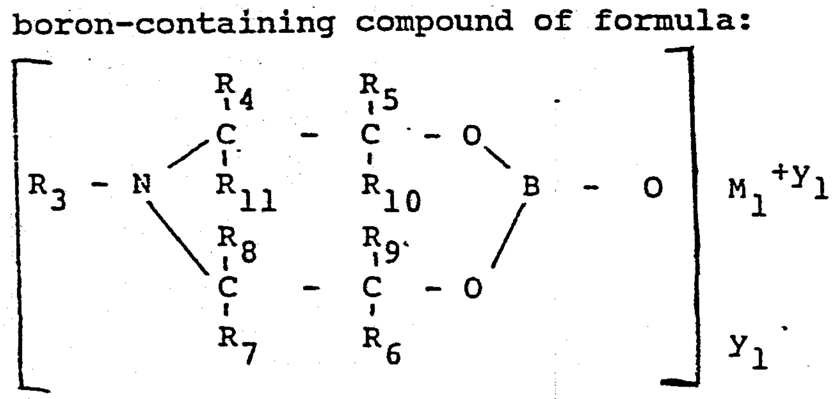

wherein $R_3$ is hydrogen or an organic radical having from about 1 to about 30 carbon atoms, $R_4$, $R_5$, $R_6$, and $R_7$ are the same or different and are either hydrogen or an organic radical, with at least one of $R_4$, $R_5$, $R_6$, and $R_7$ being an aryl, alkaryl or arylalkyl radical, $R_8$, $R_9$, $R_{10}$, and $R_{11}$ are the same or different radicals selcted from hydrogen and organic radicals, $y_1$ is an integer from 1 to 4, and $M_1$ is an inorganic or organic radical, and adding the resultant compound in a minor proportion to a lubricating oil.

22. The process as defined in claim 21 wherein both $R_5$ and $R_6$ are phenyl.

23. The process as defined in claim 21 or 22 wherein $R_4$, $R_7$, $R_8$, $R_9$, $R_{10}$, and $R_{11}$ are all hydrogen.

24. The process for producing a lubricating composition comprising reacting sulfur with a boron-containing compound having the formula:

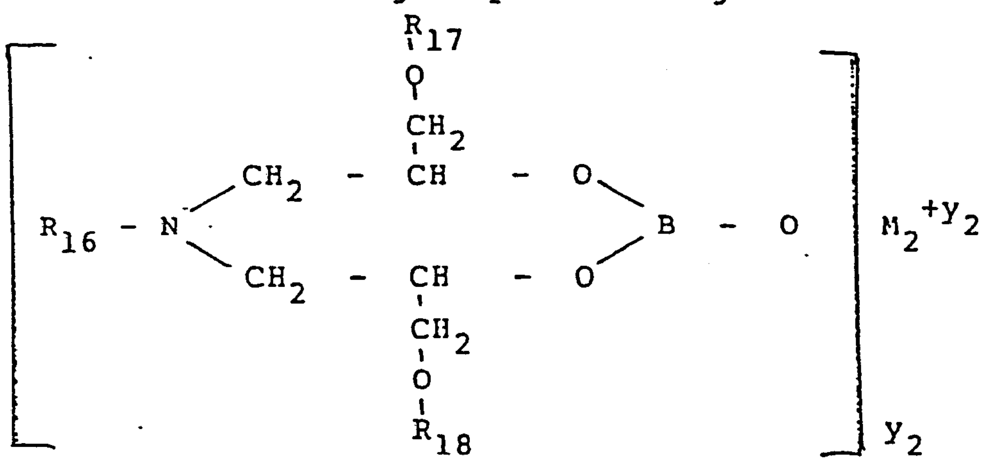

wherein $R_{16}$ is hydrogen or an organic radical having from 1 to 50 carbon atoms, $R_{17}$ and $R_{18}$ are the same or different organic radicals of between 1 and 50 carbon atoms, $y_2$ is an integer from 1 to 4, and $M_2$ is an organic or inorganic radical, and adding the resultant compound in a minor proportion to a lubricating oil.

25. The process as defined in any one of the claims 14 to 24 wherein M, $M_1$, and $M_2$ are all metals selected from the group consisting of the Group IVA metals and the transition metals having an atomic number from 21 to 30.

26. The process as defined in any one of the claims 14 to 24 wherein M, $M_1$, and $M_2$ are all hydrogen.

27. The process of producing a lubricating composition, comprising (1) contacting an aromatic or aliphatic epoxide with an unsaturated primary amine; (2) contacting the resultant product with boric acid; (3) contacting the product of step (2) with elemental sulfur to impart one or more sulfur atoms to the resultant product compound, and (4) adding the resultant product compound in a minor proportion to a lubricating oil.

28. The process of claim 27 wherein stoichiometric sulfur is used to impart only one sulfur atom to the resultant product compound.

29. The process of claim 27 wherein sulfur is added in greater than the stoichiometric amount so that more than one sulfur atom is imparted to the resultant product compound.

30. A lubricating composition comprising a major amount of a lubricating oil and a minor amount of the commpound defined in any one of claims 1 to 13.

31. A lubricating oil composition as defined in claim 30 further containing an anti-oxidant.

32. A lubricating composition as defined in claim 31 wherein the anti-oxidant has the formula:

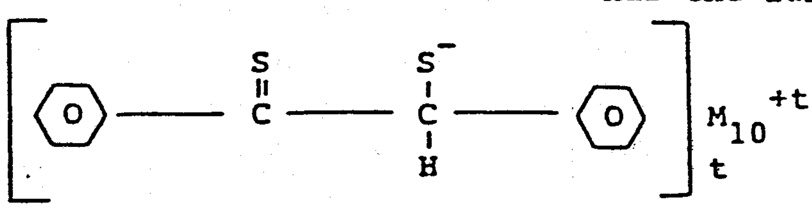

wherein $M_{10}$ is a first row transition metal and t is an integer from 1 to 4.

33. A lubricating composition as defined in claim 31 wherein the anti-oxidant has the formula:

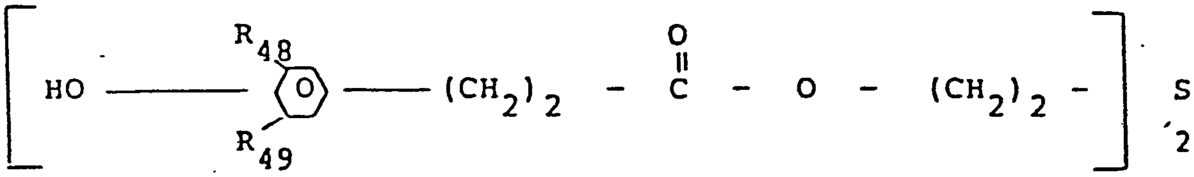

wherein $R_{48}$ and $R_{49}$ are selected from the same or different alkyl groups having from 1 to 6 carbon atoms.

34. A lubricating composition as defined in claim 31 wherein the anti-oxidant has the formula:

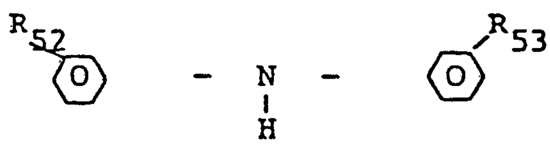

wherein $R_{52}$ and $R_{53}$ are hydrogen or the same or different aklyl radicals having from 1 to about 30 carbon atoms.

35. A lubricating composition as defined in claim 34 wherein $R_{52}$ and $R_{53}$ are alkyl groups having from 1 to 30 carbon atoms.

36. A lubricating composition as defined in claim 30 further containing one or more corrosion inhibitors.

37. A lubricating composition as defined in claim 36 wherein the corrosion inhibitor has the formula:

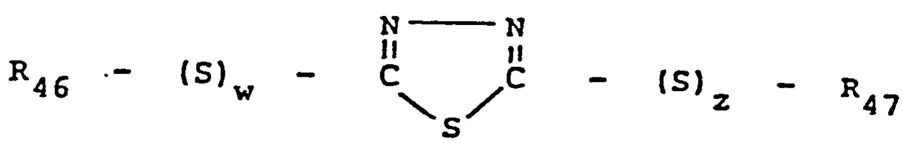

wherein $R_{42}$ and $R_{47}$ are the same or different radicals selected from hydrogen, straight or branched

chain alkyl groups, cyclic or alicyclic alkyl groups, aryl, alkaryl, and arylalkyl radicals having from 2 to about 30 carbon atoms, and w and z are integers from 1 to 8.

38. A lubricating composition as defined in claim 36 wherein the corrosion inhibitor is terephthalic acid.

39. A lubricating composition as defined in claim 31 further containing one or more corrosion inhibitors.

40. A lubricating composition as defined in claim 39 wherein the corrosion inhibitor has the formula:

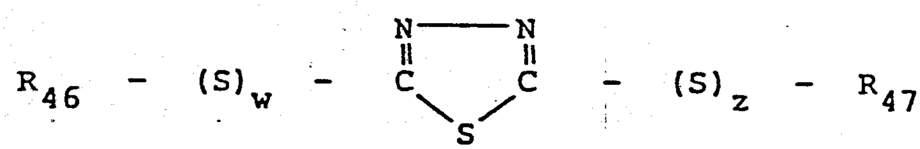

wherein $R_{46}$ and $R_{47}$ are the same or different radicals selected from hydrogen, straight or branched chain alkyl groups, cyclic or alicyclic alkyl groups, aryl, alkaryl, and arylalkyl radicals having from 2 to about 30 carbon atoms, and w and z are integers from 1 to 8.

41. A lubricating composition as defined in claim 39 wherein the corrosion inhibitor is terephthalic acid.

42. A lubricating composition as defined in claim 30 further containing one or more corrosion inhibitors selected from the group consisting of terephthalic acid and a compound of formula:

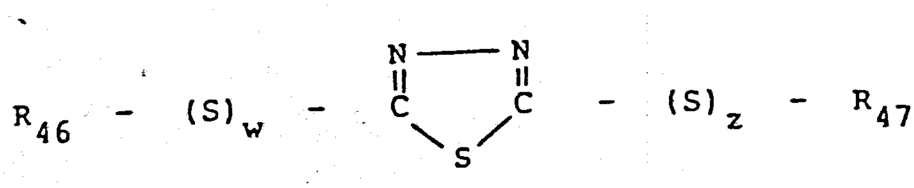

wherein $R_{46}$ and $R_{47}$ are the same or different radicals selected from hydrogen, straight or branched chain alkyl, cyclic or alicyclic alkyl, aryl, alkaryl, or arylalkyl radicals having from 2 to 30 carbon atoms, and w and z are integers from 1 to 8, said composition further containing one or more anti-oxidants selected from the group consisting of:

(I) a compound of formula:

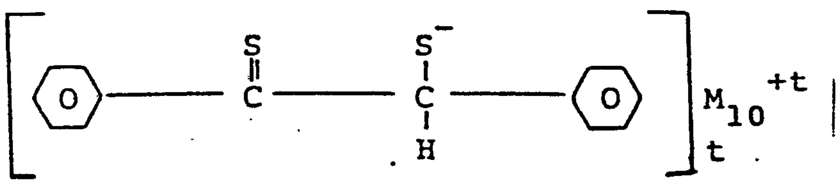

where $M_{10}$ is a first row transition metal and t is an integer from 1 to 4,

(II) a compound of formula:

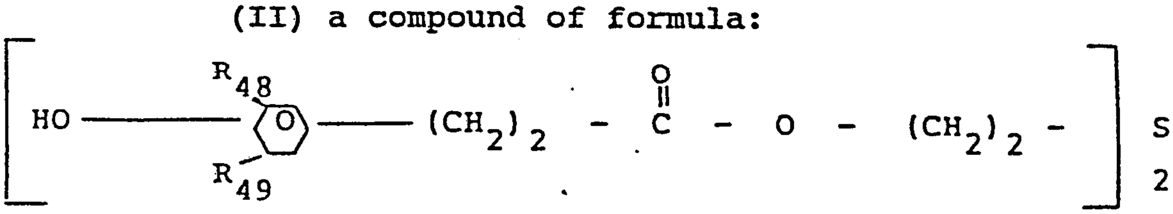

and (III) a compound of formula: